(19) Europäisches Patentamt
European Patent Office
Office européen des brevets

(11) **EP 3 206 044 B1**

(12) **EUROPÄISCHE PATENTSCHRIFT**

(45) Veröffentlichungstag und Bekanntmachung des Hinweises auf die Patenterteilung:
**13.09.2023   Patentblatt 2023/37**

(21) Anmeldenummer: **17155495.9**

(22) Anmeldetag: **09.02.2017**

(51) Internationale Patentklassifikation (IPC):
*G01S 13/00* (2006.01)    *G01S 11/06* (2006.01)
*G01V 8/00* (2006.01)    *G01S 13/76* (2006.01)
*G01S 13/42* (2006.01)    *G01S 13/88* (2006.01)

(52) Gemeinsame Patentklassifikation (CPC):
**G01S 13/003; G01S 11/06; G01V 3/12; G01V 8/00;**
G01S 13/42; G01S 13/765; G01S 13/886

(54) **VORRICHTUNG ZUM ERKENNEN EINES OBJEKTS UND ENTSPRECHENDES VERFAHREN**

DEVICE FOR DETECTING AN OBJECT AND CORRESPONDING METHOD

DISPOSITIF DE DÉTECTION D'UN OBJET ET PROCÉDÉ CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.02.2016   DE 102016202201**
**20.07.2016   DE 102016213241**

(43) Veröffentlichungstag der Anmeldung:
**16.08.2017   Patentblatt 2017/33**

(73) Patentinhaber: **Fraunhofer-Gesellschaft zur Förderung**
**der angewandten Forschung e.V.**
**80686 München (DE)**

(72) Erfinder:
• **SCHÜHLER, Mario**
**91090 Effeltrich (DE)**
• **WEISGERBER, Lars**
**02727 Ebersbach-Neugersdorf (DE)**
• **ARENDT, Johannes**
**91054 Erlangen (DE)**
• **WANSCH, Rainer**
**91083 Baiersdorf (DE)**
• **MILOSIU, Heinrich**
**91056 Erlangen (DE)**
• **OEHLER, Frank**
**91325 Adelsdorf (DE)**

(74) Vertreter: **Hersina, Günter et al**
**Schoppe, Zimmermann, Stöckeler**
**Zinkler, Schenk & Partner mbB**
**Patentanwälte**
**Radlkoferstrasse 2**
**81373 München (DE)**

(56) Entgegenhaltungen:
DE-A1-102013 100 817    GB-A- 2 525 867
US-A1- 2013 162 459    US-B1- 6 199 902

**Beschreibung**

Die Erfindung bezieht sich auf eine Vorrichtung zum Erkennen mindestens eines Objekts. Weiterhin bezieht sich die Erfindung auf ein Verfahren zum Erkennen mindestens eines Objekts.

Bei vielen Anwendungen ist es erforderlich zu erkennen, ob sich ein Objekt in einem bestimmten Raumbereich befindet. Dies gilt z. B. für den Arbeitsbereich von Industrierobotern oder von schweren Maschinen. Weiterhin lassen sich auch Stückzahlen von Produkten ermitteln, indem die Passage von Lichtschranken registriert wird. Ein anderes Anwendungsgebiet bezieht sich auf die Überwachung von Räumlichkeiten.

Weitere Anwendungen beziehen sich beispielsweise auf die Objekterkennung bzw. Zählung bei Tor- oder Hallendurchfahrten. Weitere Anwendungen sind Durchgänge oder Eingänge für Personen oder Fahrzeuge bei Gebäuden wie Flughäfen, Bahnhöfen, Stadien, Stadthallen/Arenen, Messegelände, Großhandelsmärkte, Warenhäuser usw.. Ein weiteres Anwendungsgebiet bezieht sich auf die unsichtbare Überwachung und Sicherung von Räumen, z. B. Alarmanlagen, Zutrittsüberwachung und Zutrittskontrolle.

Bei Videosystemen besteht oft das Risiko der Verdeckung oder der Sichtbehinderung, insbesondere bei großen Räumen oder Toren.

Das Erkennen und Identifizieren eines Objekts, das sich zwischen einem Sender und mehreren Empfängern befindet, durch die Auswertung der Dämpfung der ausgesendeten Signale beschreibt die US 2013/0162459 A1, wobei in Abhängigkeit von der Dämpfung auch auf die Anzahl der passierenden Objekte geschlossen werden soll.

Die DE 10 2013 100 817 A1 offenbart Mikrowellenschranken, bei denen empfangene Signale ausgewertet werden.

Die GB 2525867 A offenbart ein bistatisches Radarsystem, bei dem die Knoten elektronisch zwischen einer Vielzahl von Erfassungswinkelkonfigurationen umgeschaltet werden können.

Eine Anordnung zum Erkennen von Passagieren und deren Charakteristiken in einem Auto offenbart die US 6,199,902 B1. Dabei wird ebenfalls die Abschwächung von ausgesendeten Signalen ermittelt

Die der Erfindung zugrundeliegende Aufgabe besteht darin, eine Vorrichtung und ein Verfahren anzugeben, die es erlauben, zumindest die Anwesenheit eines Objekts - insbesondere in einem Raumbereich - zu erkennen.

Die Erfindung löst die Aufgabe durch eine Vorrichtung zum Erkennen mindestens eines Objekts gemäß Anspruch 1.

Bei den Signalen handelt es sich in einer Ausgestaltung um elektromagnetische (Funk-) Signale. In einer Ausgestaltung sind die Sendevorrichtung und/oder Empfangsvorrichtung als Sende- und Empfangsvorrichtung bzw. als Sende-/Empfangsvorrichtung ausgestaltet.

Die erfindungsgemäße Vorrichtung verfügt somit über Komponenten, mit denen Signale ausgesendet und empfangen werden. Aus dem Vergleich der jeweiligen Signale wird dann zumindest ermittelt, ob sich ein Objekt zwischen der Sendevorrichtung und der Empfangsvorrichtung und daher im Pfad der ausgesendeten Signale befindet.

In einer Ausgestaltung ist vorgesehen, dass die Auswertevorrichtung derartig ausgestaltet ist, aus den von der Sendevorrichtung ausgesendeten Signalen und den von der Empfangsvorrichtung empfangenen Signalen ein Dämpfungsmaß als Vergleichsergebnis zu ermitteln. In dieser Ausgestaltung wird ermittelt, um welches Maß die gesendeten Signale gedämpft werden. Dabei bedeutet eine Dämpfung von 100%, dass das Signal den Raum nicht hat passieren können. Entsprechend bedeutet eine Dämpfung von 0%, dass der Raum zwischen der Sende- und Empfangsvorrichtung für die Signale transparent bzw. frei von einem Objekt ist. Dieses Dämpfungsmaß erlaubt anschließend weitere Aussagen über ein Objekt, zusätzlich dazu, ob ein Objekt überhaupt vorhanden ist. Dies ist z. B. die Bestimmung oder Klassifizierung wenigstens eines Materials des Objekts.

Die Erfindung beinhaltet, dass die Vorrichtung mehrere Empfangsvorrichtungen an unterschiedlichen Positionen aufweist. Weiterhin ist die Auswertevorrichtung derartig ausgestaltet, für die von den Empfangsvorrichtungen empfangenen Signale ein der jeweiligen Empfangsvorrichtung und/oder der Position der jeweiligen Empfangsvorrichtung zugeordnetes Vergleichsergebnis zu erzeugen. In einer Ausgestaltung ist die Auswertevorrichtung derartig ausgestaltet, aus den Positionen der Empfangsvorrichtungen und den zugeordneten Vergleichsergebnissen mindestens eine Aussage über eine Eigenschaft des Objekts zu ermitteln. Die Aussage bezieht sich dabei auf das Vorhandensein des Objekts oder auf Materialeigenschaften oder auf den Umriss des Objekts usw.

Erfindungsgemäß werden die Signale an unterschiedlichen Stellen durch die einzelnen Empfangsvorrichtungen empfangen. Daher durchqueren die ausgesendeten Signale auch unterschiedliche Raumbereiche und erlauben daher Aussagen über das Vorhandensein eines Objekts in den zugeordneten Raumbereichen oder weitere Aussagen über das Objekt oder ggf. die Objekte. Daher erzeugt die Auswertevorrichtung für die Empfangsvorrichtungen jeweils ein Vergleichsergebnis und verwendet diese in Verbindung mit Daten über die jeweilige Position der Empfangsvorrichtung um wenigstens eine weitere Aussage über das Objekt - zusätzlich zu der Aussage über dessen Anwesenheit - zu erzeugen. Die Position der Empfangsvorrichtung bezieht sich dabei in einer Ausgestaltung auf ein Flächenelement.

In einer Ausgestaltung ist vorgesehen, dass die Auswertevorrichtung derartig ausgestaltet ist, für die von den Empfangsvorrichtungen empfangenen Signale jeweils ein Dämpfungsmaß zu ermitteln. Es wird somit pro Ort der Empfangsvorrichtung jeweils ein Dämpfungsmaß ermittelt.

Eine Ausgestaltung beinhaltet, dass die Auswertevorrichtung derartig ausgestaltet ist, für Amplituden der empfangenen Signale jeweils ein Amplitudenmaß zu ermitteln. In einer Ausgestaltung wird der sogenannte RSSI-Wert der empfangenen Signale ermittelt. Dabei handelt es sich um den "Receive Signal Strength Indicator", der ein Wert für die Feldstärke der empfangenen Signale ist.

In einer Ausgestaltung ist vorgesehen, dass die Auswertevorrichtung derartig ausgestaltet ist, aus dem jeweiligen Amplitudenmaß und einem der jeweiligen Empfangsvorrichtung zugeordneten Kalibrierungsmaß das Dämpfungsmaß zu ermitteln. Das jeweilige Kalibrierungsmaß wird beispielsweise durch einen Kalibriervorgang ermittelt, bei dem - ohne ein Objekt - ermittelt wird, mit welcher Amplitude ein von der Sendevorrichtung ausgesendeten Signal jeweils von der Empfangsvorrichtung empfangen wird.

Eine Ausgestaltung beinhaltet, dass die Auswertevorrichtung derartig ausgestaltet ist, aus den Dämpfungsmaßen und den Positionen der Empfangsvorrichtungen einen Umriss des Objekts ermitteln. In dieser Ausgestaltung wird ausgenutzt, dass ein ausgedehntes Objekt in der Regel den Durchgang der Signale für mehrere Empfangsvorrichtungen verhindert bzw. die Signale abschwächt. Daher kann z. B. aus der Menge der durch das Objekt gleichsam verdeckten Empfangsvorrichtungen und dem Wissen über deren Positionen zumindest auf den Umriss des Objekts geschlossen werden.

In einer Ausgestaltung ist vorgesehen, dass die Auswertevorrichtung derartig ausgestaltet ist, ausgehend von dem ermittelten Umriss des Objekts und ausgehend von - insbesondere für die oder in der Auswertevorrichtung hinterlegten - Umrissdaten das Objekt zu klassifizieren. In dieser Ausgestaltung verfügt die Auswertevorrichtung über Referenzdaten bzw. spezielle Umrissdaten, die es erlauben, das Objekt zumindest zu einer Klasse oder einer Gruppe von Objekten zuzuordnen.

Eine Ausgestaltung beinhaltet, dass die Auswertevorrichtung derartig ausgestaltet ist, aus mindestens einem ermittelten Dämpfungsmaß oder entsprechend aus mehreren ermittelten Dämpfungsmaßen eine Aussage über ein Material des Objekts zu ermitteln. In dieser Ausgestaltung werden besonders Signale ausgewertet, die zumindest gedämpft das Objekt passieren können und die nicht vollständig von dem Objekt in ihrem Pfad blockiert werden.

In einer Variante erlaubt es die Sendevorrichtung, Signale unter Verwendung von unterschiedlichen Richtcharakteristiken auszusenden, indem beispielsweise unterschiedliche Antennenelemente verwendet werden. Alternativ verfügt die Sendevorrichtung über eine spezielle Richtcharakteristik und die Sendevorrichtung wird mechanisch unterschiedlich ausgerichtet. Die genannten Richtcharakteristiken bestehen in einer Ausgestaltung darin, dass die Sendevorrichtung die Signale keulenförmig aussendet, so dass die Signale hauptsächlich in den Raumbereich gelangen, in den die jeweilige Keule oder Hauptkeule weist.

In einer Ausgestaltung ist vorgesehen, dass die Sendevorrichtung derartig ausgestaltet ist, Signale in mehrere unterschiedliche Raumbereiche auszustrahlen. In dieser Ausgestaltung richtet die Sendevorrichtung die Signale jeweils in einen von mehreren Raumbereichen aus. Indem die Signale abwechselnd jeweils in andere Raumbereiche ausgestrahlt werden, wird insgesamt der Raum um die Sendevorrichtung herum bereichsweise mit den Signalen beaufschlagt.

Eine Ausgestaltung beinhaltet, dass die Auswertevorrichtung eine Signalbewertevorrichtung aufweist. In einer Ausgestaltung sind mehrere Signalbewertevorrichtungen vorhanden. Dabei ist die mindestens eine Signalbewertevorrichtung derartig ausgestaltet, das Vergleichsergebnis zu erzeugen. Zudem ist die Signalbewertevorrichtung der Empfangsvorrichtung zugeordnet. Weiterhin ist die Empfangsvorrichtung derartig ausgestaltet, abhängig vom Vergleichsergebnis ein Antwortsignal zu erzeugen.

In einer weiteren Ausgestaltung weist die Auswertevorrichtung mehrere Signalbewertevorrichtungen für mehrere Empfangsvorrichtungen auf. Dabei sind die Signalbewertevorrichtungen derartig ausgestaltet, Vergleichsergebnisse zu erzeugen. Insbesondere ist den Empfangsvorrichtungen jeweils mindestens eine Signalbewertevorrichtung zugeordnet, so dass die mindestens eine Signalbewertevorrichtung das Vergleichsergebnis für das von der zugeordneten Empfangsvorrichtung empfangene Signal ermittelt. Zudem sind die Empfangsvorrichtungen derartig ausgestaltet, jeweils abhängig vom Vergleichsergebnis ein Antwortsignal zu erzeugen.

In den beiden vorgenannten Ausgestaltungen verfügt die Empfangsvorrichtung bzw. verfügen die Empfangsvorrichtungen jeweils über eine Signalbewertevorrichtung, die jeweils ein Vergleichsergebnis erzeugt. Das Vergleichsergebnis wird zusätzlich zur Auswertung hinsichtlich des Objekts noch als Kriterium benutzt, ob die Empfangsvorrichtung oder die Empfangsvorrichtungen ein Antwortsignal erzeugt bzw. erzeugen. Daher ereignet sich die Bewertung der empfangenen Signale dezentral durch die einzelnen Signalbewertevorrichtungen. Damit die Signalbewertevorrichtungen die gesendeten mit den empfangenen Signalen vergleichen können, sind in einer Ausgestaltung Referenzdaten aus Kalibrierungen vorhanden. In einer alternativen oder ergänzenden Ausgestaltung sind in den Signalbewertevorrichtungen die Daten über die von der Sendevorrichtung gesendeten Signale hinterlegt. Die Empfangsvorrichtung ist daher in dieser Ausgestaltung auch eine Sendevorrichtung zum Aussenden bzw. allgemein zum Ausgeben des Antwortsignals. Das Antwortsignal wird dabei in einer Ausgestaltung kabellos ausgesendet und wird in einer alternativen kabelgebunden übertragen.

Indem die Ausgabe des Antwortsignals abhängig von dem Vergleichsergebnis ist, lässt sich die Menge der Daten und insbesondere der Energiebedarf auf Seiten der Empfangsvorrichtung, die damit auch eine Sendevorrichtung ist, reduzieren. Der Vorteil besteht darin, dass nicht generell jedes Antwortsignal ausgegeben wird, sondern nur besondere.

Daher ist in einer Ausgestaltung vorgesehen, dass die Empfangsvorrichtung das Antwortsignal nur beim Vorliegen einer vorgebbaren Bedingung ausgibt. Es muss also wenigstens eine vorgegebene Bedingung erfüllt sein, damit das Antwortsignal ausgegeben wird.

Entsprechend ist beim Vorliegen einer Vielzahl von Empfangsvorrichtungen mit Signalbewertevorrichtungen in einer Ausgestaltung vorgesehen, dass die Empfangsvorrichtungen die Antwortsignale nur beim Vorliegen einer jeweils vorgebbaren Bedingung ausgeben. Dabei sind in einer Ausgestaltung die Bedingungen für alle Empfangsvorrichtungen gleich. In einer alternativen Ausgestaltung ist zumindest für eine Empfangsvorrichtung die Bedingung unterschiedlich zu den Bedingungen für die anderen Empfangsvorrichtungen.

Eine vorgebbare Bedingung für das Ausgeben des Antwortsignals ist, dass überhaupt ein Vergleichsergebnis vorhanden ist, d. h. dass die Empfangsvorrichtung überhaupt ein Signal empfangen hat.

Eine Ausgestaltung beinhaltet, dass die vorgebbare Bedingung mindestens darin besteht, dass ein als Vergleichsergebnis ermitteltes Dämpfungsmaß größer als ein vorgebbarer Dämpfungsgrenzwert ist. In dieser Ausgestaltung werden somit nur dann die Antwortsignale ausgegeben, wenn ein Mindestdämpfungsmaß überschritten worden ist. Je nach Anwendungsfall findet möglicherweise auch ohne die Anwesenheit des Objekts eine gewisse Dämpfung statt. Je nach den spezifischen Eigenschaften der Empfangsvorrichtungen haben diese ggf. eine beschränkte Genauigkeit beim Empfang bzw. bei der Verarbeitung der empfangenen Signale. Da daher eine gewisse Grundschwankung besteht, wird hier eine untere Grenze für die Dämpfung vorgegeben. In anderen Ausgestaltungen lässt sich durch die Vorgabe der unteren Grenze die Menge der erkennbaren Objekte einschränken.

In einer Ausgestaltung ist vorgesehen, dass die vorgebbare Bedingung mindestens darin besteht, dass das Vergleichsergebnis sich über einen vorgebbaren Entwicklungsgrenzwert von einem vorherigen Vergleichsergebnis unterscheidet. In dieser Ausgestaltung werden die Antwortsignale nur dann ausgegeben, wenn sich das Vergleichsergebnis über ein vorgebbares Maß in Form eines Entwicklungsgrenzwerts hinaus von einem vorherigen Wert unterscheidet. Ändert sich das Vergleichsergebnis somit nicht oder unterhalb des Entwicklungsgrenzwerts, so wird das Antwortsignal nicht ausgegeben. Das bedeutet, dass nur hinreichend deutliche Änderungen des empfangenen Signals und daher Änderung im Raum vor der Empfangsvorrichtung durch das Antwortsignal signalisiert werden. Diese Ausgestaltung trägt ebenfalls zu einer Reduktion der zu übertragenen Signale bzw. zu einer Reduktion des Energiebedarfs der Empfangsvorrichtungen bei.

Eine Ausgestaltung beinhaltet, dass mindestens eine Empfangsvorrichtung als Sendevorrichtung dient. In dieser Ausgestaltung handelt es sich somit um mindestens eine Empfangs-/Sendevorrichtung. In einer Ausgestaltung erlaubt dies die Ausgabe der Antwortsignale. In einer alternativen oder ergänzenden Ausgestaltung passieren die Signale zweimal den Raum, in dem sich das Objekt befindet bzw. befinden kann. Dies z. B. für die Identifizierung der Materialeigenschaften des Objekts.

In einer Ausgestaltung ist vorgesehen, dass mindestens eine Empfangsvorrichtung derartig ausgestaltet ist, Signale auszugeben. In dieser Ausgestaltung handelt es sich somit um eine Empfangs-/Sendevorrichtung.

Die vorgenannte Ausgestaltung erlaubt es in einer Ausgestaltung, dass die Empfangsvorrichtungen die Antwortsignale als Signale und in einer Ausgestaltung insbesondere als Funksignale ausgeben. In einer Ausgestaltung geben die Empfangsvorrichtungen als Antwortsignale einen Wert für die Amplitude der empfangenen Signale aus. In einer weiteren Ausgestaltung wird das ermittelte Dämpfungsmaß als Antwortsignal ausgegeben. In einer zusätzlichen Ausgestaltung wird der Unterschied zwischen einem Wert eines aktuell empfangenen Signals und dem entsprechenden Wert eines vorher empfangenen Signals als Antwortsignal ausgegeben.

In einer weiteren Ausgestaltung dienen die Empfangsvorrichtungen ebenfalls als Sendevorrichtungen, so dass von ihnen die Signale ausgehen, die den Raum durchqueren, in den sich das Objekt befinden kann. In dieser Ausgestaltung sind daher insgesamt zwei Sende-/Empfangsvorrichtungen vorgesehen, die so angeordnet sind, dass sich zwischen ihnen der Raum befindet, in dem sich wiederum das Objekt befinden kann.

Eine Ausgestaltung beinhaltet, dass mindestens eine Empfangsvorrichtung derartig ausgestaltet ist, nach dem Empfangen eines Signals von einem passiven Zustand in einen aktiven Zustand zu wechseln. Die beschriebene Empfangsvorrichtung wird somit durch das empfangene Signal geweckt. Solche Empfangsvorrichtungen sind beispielsweise offenbart in der Offenlegungsschrift DE 10 2009 047 199 A1.

In einer Ausgestaltung ist vorgesehen, dass mindestens eine Empfangsvorrichtung einen Energiespeicher aufweist. Der Energiespeicher ist beispielsweise eine Batterie oder ein Akkumulator/Akku.

Eine Ausgestaltung beinhaltet, dass mindestens eine Empfangsvorrichtung derartig ausgestaltet ist, aus einem vorgebbaren Raumbereich ein Signal zu empfangen. In dieser Ausgestaltung verfügt die Empfangsvorrichtung über die Möglichkeit, Signale nur aus einem vorgebbaren Raumbereich zu empfangen. Damit horcht die Empfangsvorrichtung gleichsam nur in eine Richtung, so dass auch nur ein Objekt, dass sich in diesem Raumbereich befindet, auf die gesendeten Signale und damit auch auf die empfangenen Signale einwirken kann. Es findet daher ein selektiver Empfang der Signale statt.

In einer Ausgestaltung sendet die Sendevorrichtung die Signale in ausgesuchte Raumbereich aus und empfängt die Empfangsvorrichtung Signale nur aus ausgesuchten Raumbereichen. Durch das selektive Senden und Empfangen wird der Raum zwischen den beiden Vorrichtungen gleichsam stückweise abgetastet.

In einer Ausgestaltung erlaubt die mindestens eine Empfangsvorrichtung den Empfang aus einem von mehreren vorgebbaren Raumbereichen. In dieser Ausgestaltung scannt die Empfangsvorrichtung gleichsam den Raum um sich herum ab und empfängt Signale jeweils nur aus den ausgewählten Raumbereichen.

Erfindungsgemäß ist vorgesehen, dass die Vorrichtung eine Halterungsvorrichtung aufweist und dass mehrere Empfangsvorrichtungen an unterschiedlichen Positionen der Halterungsvorrichtung angeordnet sind. In einer Ausgestaltung handelt es sich bei der Halterungsvorrichtung um ein Wandelement, in oder an dem sich die Empfangsvorrichtungen befinden.

Eine Ausgestaltung beinhaltet, dass die Sendevorrichtung derartig ausgestaltet ist, Signale mit unterschiedlichen Frequenzen auszustrahlen. Die unterschiedlichen Frequenzen dienen in einer Ausgestaltung der Bestimmung der Materialien des Objekts.

Erfindungsgemäß ist vorgesehen, dass die Sendevorrichtung als Mehrkeulenantenne ausgestaltet ist. Die Sendevorrichtungen ist in dieser Ausgestaltung eine Mehrkeulen-(alternative Bezeichnung: Multibeam-)Antenne. Es bestehen somit mehrere Richtcharakteristiken der Sendevorrichtung, die jeweils durch eine Keule bzw. Hauptkeule ausgezeichnet sind. Damit geht einher, dass die Sendevorrichtung die Signale hauptsächlich in Richtung der ausgewählten oder geschalteten Keulen ausstrahlt.

In einer Ausgestaltung handelt es sich bei der Empfangsvorrichtung ebenfalls um eine Mehrkeulenantenne mit unterschiedlichen auswählbaren Keulen. Diese Antennenform erlaubt es in einer Ausgestaltung, dass die Empfangsvorrichtung Signale selektiv aus den Raumbereichen empfangen kann, die den Keulen zugeordnet sind. In einer weiteren Ausgestaltung werden die Signale abwechselnd mit unterschiedlichen Keulen empfangen. Die Erfindung beinhaltet, dass die Sendevorrichtung mehrere unterschiedliche Richtcharakteristiken aufweist und dass die Richtcharakteristiken sich jeweils auf eine Menge an räumlich unterschiedlichen Sendeeigenschaften beziehen. Die Richtcharakteristiken bedeuten somit, dass die Signale in unterschiedliche Raumbereiche unterschiedlich stark ausgesendet werden.

Die Erfindung umfasst in einer Ausgestaltung eine Vorrichtung, bestehend aus einer Sende- und Empfangsvorrichtung, die eine Antennenanpassung, eine Antennensteuerung sowie eine Antenne mit keulenförmiger Richtcharakteristik aufweist und die als schaltbare Mehrkeulenantenne ausgeführt ist. Die Sende-/Empfangsvorrichtung erlaubt die Kommunikation mit beispielweise an einer Wand platzierten Funkmodulen mit autonomer Stromversorgung. Die Empfangsvorrichtungen verfügen z. B. über eine Batterie oder Energy-Harvesting-Generatoren sowie über eine Funkanbindung bestehend aus einem vorzugsweise stromsparenden Funkempfänger und einem Funksender sowie einer Rechen- und einer Steuereinheit.

Weiterhin löst die Erfindung die Aufgabe durch ein Verfahren zum Erkennen mindestens eines Objekts gemäß Anspruch 15.

Die Ausgestaltungen der Vorrichtungen lassen sich entsprechend auch durch das Verfahren realisieren, so dass die zugehörigen Ausführungen auch entsprechend gelten. Dies gilt auch umgekehrt, so dass sich das Verfahren auch durch die Vorrichtung realisieren lässt.

Die Erfindung erlaubt insgesamt eine schnelle parallele Kommunikation zwischen der Sendevorrichtung als zentraler Funkeinheit und den Empfangsvorrichtungen im Raum sowie die Identifikation und die Lokalisierung des mindestens einen Objekts in diesem Raum. Eine Synchronisation zwischen der Sensorvorrichtung und den Empfangsvorrichtungen ist dabei nicht erforderlich.

Die Erfindung ermöglicht die funkbasierte Erfassung von Objekten. Je nach Ausgestaltung liegen die Messreichweiten zwischen 1 m bis 10 m oder können bis zu 300 m reichen.

Dabei erfolgt in einer Ausgestaltung eine schnelle Formdetektion (z. B. in Bezug auf Grö-ße bzw. Ausdehnung in x-/y-/z-Richtung) eines Objekts auf Basis einer vorzugsweise aus stromsparenden Funkempfängern aufgebauten Funkmodulewand. Dazu wird in einer Ausgestaltung eine zentrale Funkvorrichtung verwendet, die in einer Ausgestaltung als Antennenvorrichtung mit keulenförmiger Richtcharakteristiken ausgeführt ist, wobei es sich insbesondere um eine schaltbare Mehrkeulenantenne handelt.

Die Vorrichtung und das Verfahren erlauben eine Klassifikation von Form, Bewegungsrichtung, Bewegungsgeschwindigkeit oder z. B. auch Materialart oder Materialklasse des Objekts (z. B. Biogewebe, wässriges Gewebe, Metall, Holz u. a.). Letzteres baut auf der sektoralen Bestimmung der Hochfrequenz-Durchdringung. Aus Form und Materialklasse können insbesondere in einer Ausgestaltung auch Personen, Fahrzeuge oder z. B. Transportmittel erkannt und unterschieden werden.

In einer Ausgestaltung wird ein flexibler Aufbau ermöglicht, indem batteriebetriebene Empfänger und Sender insbesondere als Empfangsvorrichtungen verwendet werden. Die Empfangsvorrichtungen haben nur einen sehr geringen Installationsaufwand, sind wartungsarm und benötigen keine Stromnetzanbindung und sind dadurch auch unabhängig vom Betriebszustand des Stromnetzes.

Die Richtwirkung der Mehrkeulenantenne reduziert die erforderliche Sendeleistung der Funkkomponenten und begünstigt den Einsatz von stromsparenden Funkempfängern mit etwas reduzierter Empfindlichkeit (z. B. Wake-Up-Receiver) gegenüber stromzehrenden Standardfunkempfängern.

Im Einzelnen gibt es eine Vielzahl von Möglichkeiten, die erfindungsgemäße Vorrichtung und das erfindungsgemäße Verfahren auszugestalten und weiterzubilden. Dazu wird verwiesen einerseits auf die Patentansprüche, andererseits auf die folgende Beschreibung von Ausführungsbeispielen in Verbindung mit der Zeichnung. Es zeigen:

Fig. 1      einen beispielhaften Aufbau der Vorrichtung zur Verdeutlichung der Prinzips,

Fig. 2      einen Zustand während des Beaufschlagens der Empfangsvorrichtungen mit Signalen der Sendevorrichtung,

Fig. 3      ein Beispiel für eine Matrix mit ermittelten Pfaddämpfungen $ATTEN_{i,j}$,

Fig. 4      ein Beispiel für die diskretisierten Pfaddämpfungen der Fig. 3,

Fig. 5      eine Vorrichtung mit einem Automobil als Objekt im Durchgangsbereich der Signale,

Fig. 6      die Vorrichtung der Fig. 5 mit einer Person mit Einkaufswagen als Objekt,

Fig. 7      die Vorrichtung der Fig. 5 mit einem Gabelstapler als Objekt,

Fig. 8 a) - f)      die für die Beispiele der Abbildungen Fig. 5 - 7 ermittelte Dämpfungswerte,

Fig. 9      ein Beispiel für den zeitlichen Ablauf von Verfahrensschritten,

Fig. 10      eine beispielhafte Vorrichtung mit Empfangsvorrichtungen entlang einer Transportstrecke,

Fig. 11      Beispielhafte Antwortsignale für die Vorrichtung der Fig. 10,

Fig. 12      eine zur Veranschaulichung dienende nicht erfindungsgemäße Vorrichtung zur Objekterkennung mit zwei Sende-/Empfangsvorrichtungen mit jeweils einer schaltbaren Mehrkeulenantenne,

Fig. 13      eine weitere Ausgestaltung der erfindungsgemäßen Vorrichtung und

Fig. 14      eine alternative Ausgestaltung einer erfindungsgemäßen Vorrichtung.

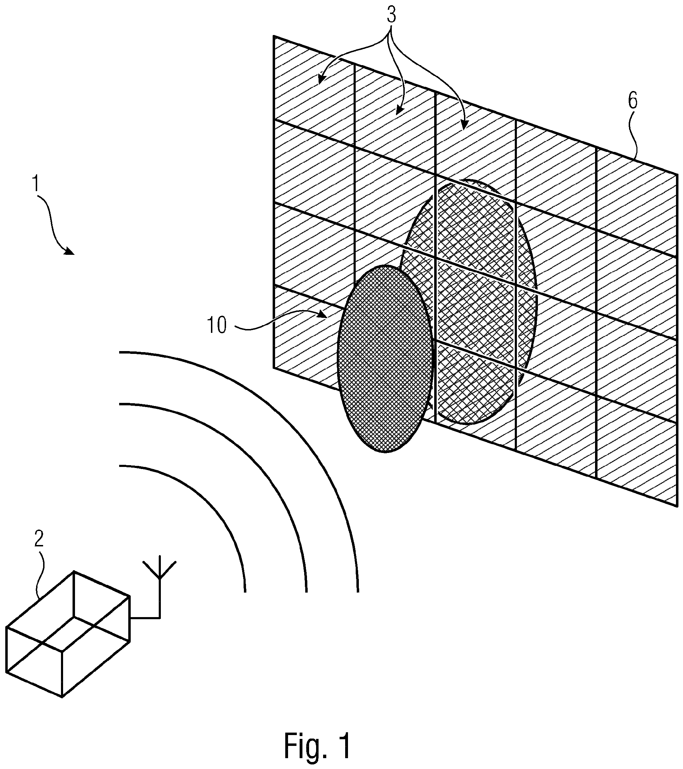

Die Fig. 1 zeigt als Prinzipskizze einen beispielhaften Aufbau der Vorrichtung 1 zur Erkennung eines Objekts 10. Die Vorrichtung 1 verfügt über eine Sendevorrichtung 2 (andere Bezeichnung ist: zentrale Funkeinheit) und beabstandet dazu über Empfangsvorrichtungen 3 (andere Bezeichnung ist: Funkmodul), die hier in einer Wand 6 mit einer Segmentierung in insgesamt 20 Teilbereichen angebracht sind bzw. die diese Teilbereiche bilden.

Die Sendevorrichtung 2 ist hier eine Mehr-Keulen-Antenne (MKA oder Mulibeam-Antenne), die hier als Sender und Empfänger fungiert. Dabei wird die OOK-Modulierung verwendet. OOK steht dabei für das sogenannte On-Off-Keying, bei dem das Trägersignal einer digitalen Information an- und ausgeschaltet wird, um eine logische 1 bzw. eine logische 0 zu übertragen.

Die Empfangsvorrichtungen 3 erlauben ebenfalls sowohl das Empfangen als auch das Senden von Signalen. Insbesondere handelt es sich um entsprechend der Segmentierung m * n (hier 5 * 4) WakeUp-Detektoren (siehe z. B. die Offenlegungsschrift DE 10 2009 047 199 A1). Dabei beträgt in dem gezeigten Beispiel die Stromaufnahme der Empfangsvorrichtungen 3 weniger als 20 µA.

Die Empfangsvorrichtungen 3 (im Folgenden teilweise auch als Funkmodule bezeichnet) sind zum Beobachtungszeitpunkt in der Wand 6 vorzugsweise regelmäßig angeordnet und zunächst nicht bewegt. Die Funkmodule 3 werden durch die Ausgestaltung der Sendevorrichtung 2 (im Folgenden teilweise als zentrale Funkeinheit bezeichnet) mit einem gebündelten Funkstrahl als Signal (im Folgenden auch "Beam" genannt) anvisiert.

Die Anordnung der Empfangsvorrichtungen 3 erfolgt in einer - nicht dargestellten - Ausgestaltung ergänzend über Bodenplatten sowie Deckenplatten. In einer Ausgestaltung ist insbesondere jede Boden- oder Deckenplatte mit einem stromsparenden Funkempfänger als Empfangsvorrichtung und einem zentralen Funksender als Sendevorrichtung ausgestattet. In einer weiteren Ausgestaltung sind zusätzlich Sensoren, z. B. Infrarotsensoren, Wärme- oder Feuchtigkeitssensoren, vorhanden, die die Nähe eines beweglichen Gegenstandes oder einer Person detektieren und dann zentralen Funkeinheit - also die Sendevorrichtung - zum Aussenden der Signale anstößt. Somit kann für jede Bodenplatte bzw. jede Empfangsvorrichtung das Befahren oder Betreten individuell registriert und mit geringer Verzögerung durch die zentrale Funkeinheit auch gleichzeitig für alle Bodenplatten festgestellt werden. Andere sensorische Ereignisse wie z. B. Beleuchtung oder verminderte Helligkeit durch Abschattung können ebenfalls - durch entsprechende Sensoren - die Sendevorrichtung aktivieren.

Ein beispielhafter Ablauf zur Detektion eines Objekts 10 wird anhand der folgenden Schritte erläutert. Dabei gelten die Ausführungen entsprechend auch für ergänzende oder alternative Ausgestaltungen. Zudem sind nicht alle Schritte bei allen Ausgestaltungen erforderlich.

Das Verfahren besteht in folgenden Stufen oder Schritten:

Schritt 1: Gebündeltes Aussenden eines Signals von der Sendevorrichtung 2 an eine jeweilige Empfangsvorrichtung 3.

Schritt 2: Aussenden eines Antwortsignals von der Empfangsvorrichtung 3 in dem Fall, dass eine Signaldämpfung feststellbar ist.

Schritt 3: Einstellen des Signals für ein nächstes Feld und weiter mit Schritt 1.

Schritt 4: Diskretisierung der RSSI- bzw. der Dämpfungswerte, die sich aus den Antwortsignalen ergeben.

Schritt 5: Formklassifikation und Ableitung von Bewegungsvektoren des Objekts.

Bei der Verdeckung der Empfangsvorrichtungen 3 durch das Objekt 10 sei hier bereits auf den Schattenwurf hingewiesen, der das Objekt 3 größer erscheinen lässt. Für diesen Effekt sieht es eine - hier nicht dargestellte - Ausgestaltung vor, dass die Empfangsvorrichtungen 3 so verteilt sind, dass sich auch ein Abstand des Objekts 10 zu der Halterungsvorrichtung 6 ermitteln lässt.

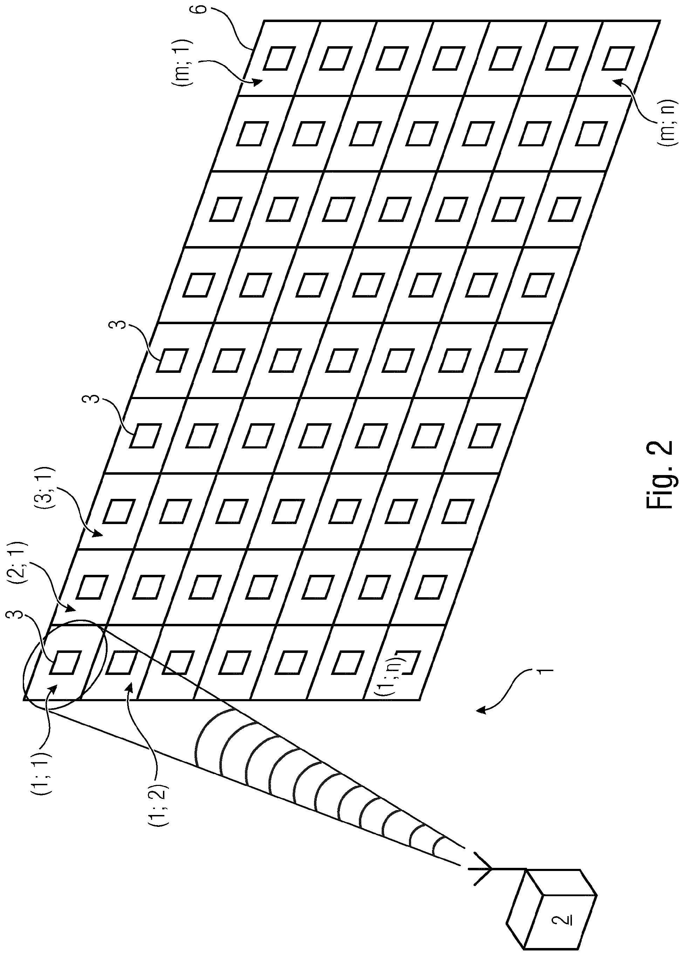

Die Fig. 2 zeigt den Fall, dass die als Mehrkeulenantenne ausgestaltete Sendevorrichtung 2 mit ihrer Richtcharakteristik und daher mit ihre Hauptstrahlrichtung auf ein erstes Feld einer Funkmodulewand 6 ausgerichtet ist. Die Richtcharakteristiken beziehen sich dabei auf räumlich unterschiedliche Ausstrahleigenschaften, wobei jede Richtcharakteristik hier durch eine Keule gekennzeichnet ist.

Mit dem Schalten der unterschiedlichen Richtcharakteristiken wird dabei in dem gezeigten Ausführungsbeispiel die Hauptkeule über die Felder der Wand 6 und damit über die Empfangsvorrichtungen 3 geleitet. Die m * n Felder seien im Folgenden mit (i; j) bezeichnet, wobei i = 1, 2 ... mund j = 1, 2 ... n.

Anschließend wird ein als Aufwecktelegramm bezeichnetes Funktelegramm bzw. Signal an die Empfangsvorrichtung 3 im ersten Feld (1; 1) gesendet. Dies kann eine Aktiviersequenz mit einer Dauer von z. B. 30 ms sein.

Die Empfangsvorrichtung 3 empfängt die - insbesondere vorab vereinbarte - Aktiviersequenz im gesendeten Signal und erkennt sie auch. Daraufhin bereitet die Empfangsvorrichtung 3 ein Antwortsignal für den obigen Schritt 2 vor. Das Funkmodul als Empfangsvorrichtung 3 im ersten Feld (1; 1) ist nun "geweckt" bzw. aktiv.

In einer Ausgestaltung wird - z. B. für eine verfeinerte Ermittlung der Signaldämpfung zwischen der Sendevorrichtung 2 und der Empfangsvorrichtung 3 in einem Feld (i; j) - ein gesondertes Signal von der Sendevorrichtung 2 ergänzend ausgesendet.

Die vorzugsweise stromsparende Empfängervorrichtung 3 erfasst das gesendete Signal und bestimmt für die Signalamplitude einen RSSI-Wert, vorzugsweise als Digitalwert. Liegt der für die Signalamplitude ermittelte RSSI-Wert oberhalb eines erwarteten RSSI-Soll-Werts, der z. B. in einer gesonderten Kalibrierung vorab bei hindernisfreier Umgebung ermittelt wurde, so führt der von einer entsprechenden Recheneinheit in der Empfangsvorrichtung 3 ermittelte RSSI-Wert zu der Aktion in dem obigen Schritt 2, d. h. die Empfangsvorrichtung 3 gibt ein Antwortsignal aus. Dies geschieht hier beispielsweise über Funksignale.

Im Schritt 2 verzichtet in der dargestellten Ausgestaltung die Empfangsvorrichtung 3 auf eine Rückantwort in Form des Aussendens eines Antwortsignals zu der Sendevorrichtung 2 als zentraler Funkeinheit in dem folgenden Fall: Für den Fall gilt, dass der RSSI-Unterschied, der definiert ist als Differenz zwischen dem aktuell ermittelten RSSI-Wert ($RSSI_{ist}$) und einem erwarteten Soll-Wert ($RSSI_{erwartet}$): $RSSI_{ist}$ - $RSSI_{erwartet}$, unterhalb eines vereinbarten Schwellwertes (dem Dämpfungsgrenzwert) liegt. In einer alternativen Ausgestaltung wird der Dämpfungsgrenzwert bezogen auf einen prozentualen Wert für die ermittelte Amplitude relativ zu der erwarteten Amplitude.

Für den Fall, dass der RSSI-Unterschied größer als der Schwellwert ist, wird je nach Ausgestaltung entweder der ermittelte $RSSI_{ist}$-Wert oder der RSSI-Unterschied ($RSSI_{ist}$ - $RSSI_{erwartet}$) oder eine entsprechende diskretisierte Größe als Funktelegramm von der Empfangsvorrichtung 3 als Funkmodul im Feld (i; j) zurück an die zentrale Funkeinheit 2 gesendet werden.

Aus Gründen der Überprüfbarkeit der vollständigen Funktionstüchtigkeit der Empfangsvorrichtung 3 im Feld (i; j) erfolgt in einer Ausgestaltung auf besondere Veranlassung durch die Sendevorrichtung 2 die Rücksendung entweder der $RSSI_{ist\text{-}Werte}$ oder des RSSI-Unterschieds, gegeben durch $RSSI_{ist}$ - $RSSI_{erwartet}$ als Funktelegramm bzw. als Antwortsignal.

Für den Fall, dass sich im Strahlengang zwischen Sendevorrichtung 2 und Empfangsvorrichtung 3 keine Objekte befinden, entfallen die Antworten der Empfangsvorrichtung 3. Damit können die Empfangsvorrichtung die meiste Zeit auf Empfang verharren und verbrauchen nur den durch den jeweils stromsparenden Funkempfänger erforderlichen Strom. Dadurch ist ein wartungsarmer Betrieb der Funkmodulewand 6 mit Batterien über mehrere Jahre möglich.

In Schritt 3 wird die Richtcharakteristik der schaltbaren Mehrkeulenantenne 2 auf ein nächstes Feld ausgerichtet.

Die Reihenfolge der angepeilten m * n Felder kann regelmäßig auf- oder absteigend sein, zeilen- oder spaltenweise oder auch in Diagonalen oder auch zufällig oder heuristisch erfolgen. Die Bestimmung des jeweiligen RSSI-Wertes erfolgt wie in Schritt 1 und 2 beschrieben.

Nach Erfassung aller m * n Felder ergibt sich insgesamt bei dem hier diskutierten Beispiel eine Matrix der einzelnen RSSI-Werte $(RSSI_{ist})_{i,j}$ bzw. der festgestellten Abweichungen vom jeweils erwarteten RSSI-Wert $(RSSI_{ist}$ - $RSSI_{erwartet})_{i,j}$. Dies ist daher ein Messzyklus, der sich als eine Abbildung des Raums zwischen der Sendevorrichtung und der Empfangsvorrichtung verstehen lässt.

Im Folgenden sei als beispielhafter Dämpfungswert für die einzelnen Felder mit Koordinaten (i; j) definiert:

$$ATTEN_{i,j} := (RSSI_{ist} - RSSI_{erwartet})_{i,j}.$$

Je nach Dämpfung des Funksignals im Strahlenbündel für ein Feld (i; j) beim Durchgang durch ein Objekt, das sich zwischen der Sendevorrichtung 2 und den Empfangsvorrichtungen 3 in der Wand 6 befindet, geben die jeweiligen Pegelwerte $ATTEN_{i,j}$ Auskunft über das zu detektierende Hindernis bzw. Objekt.

Dabei ist die Dämpfung abhängig vom Material und von der Dicke des Objekts beim jeweiligen Strahlengang sowie von der Frequenz der Strahlung.

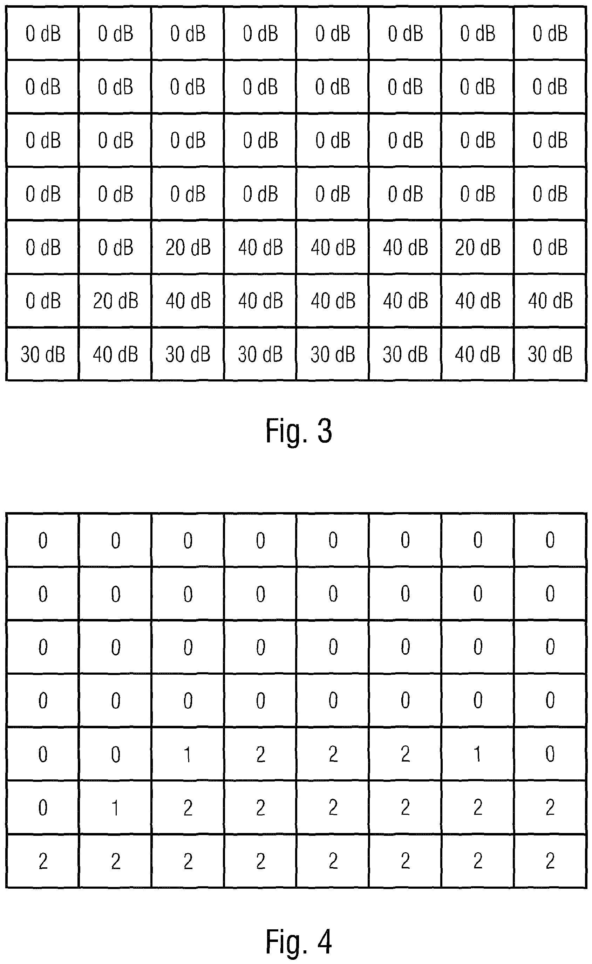

Fig. 3 zeigt eine mögliche Matrix $ATTEN_{i,j}$, die sich beim Strahldurchgang durch ein Testobjekt ergibt und bei der die ermittelten Dämpfungsmaße in Dezibel angegeben sind.

In Schritt 4 der beispielhaften Ausgestaltung wird die Matrix der Fig. 3 zur vereinfachten Berechnung noch mit 1 bis k Entscheidungsschwellen ($ATTEN_{schwelle,i}$) diskretisiert.

In einer Ausgestaltung ergibt sich eine Vorschrift zur Bildung der diskreten Pfaddämpfungsklassen $disk\_ATTEN_{i,j}$ wie folgt:
Wenn $ATTEN_{schwelle,S-1} < ATTEN_{i,j}$ und wenn $ATTEN_{i,j} <= ATTEN_{schwelle,S}$, dann sei $disk\_ATTEN_{i,j} := S$.

Gibt man für das Beispiel der Fig. 3 zwei Entscheidungsschwellen: $ATTEN_{schwelle,1} = 15$ dB und $ATTEN_{schwelle,2} = 25$ dB vor, so ergibt sich die Matrix der diskreten ATTEN-Werte der Fig. 4.

Für eine stromsparendere Weiterverarbeitung ist die Diskretisierung mit nur einer Entscheidungsschwelle vorgesehen. In diesem Fall ergeben sich Matrizen mit den binären Einträgen 0 oder 1.

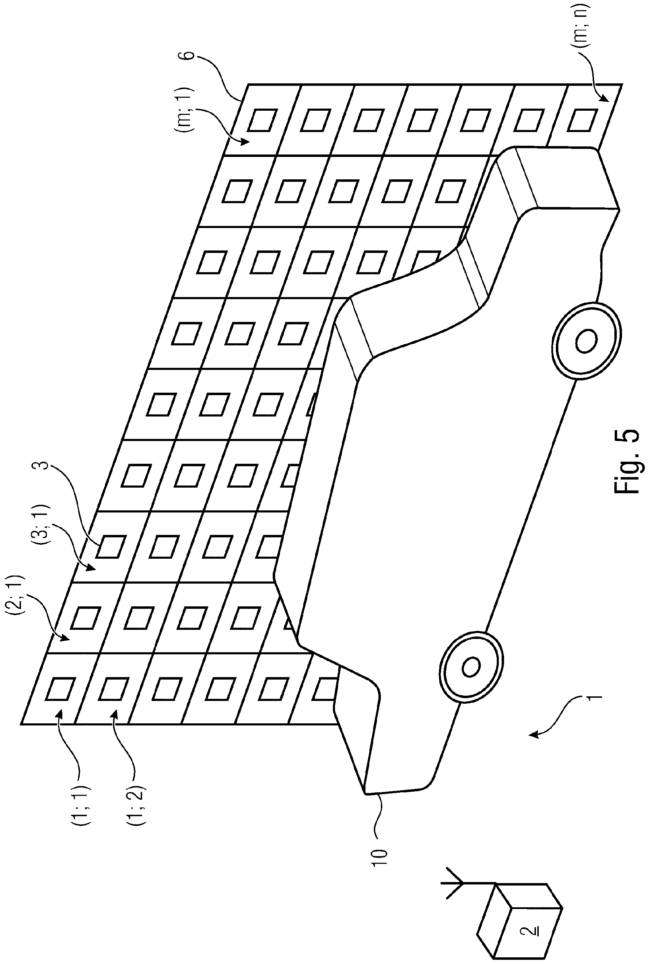

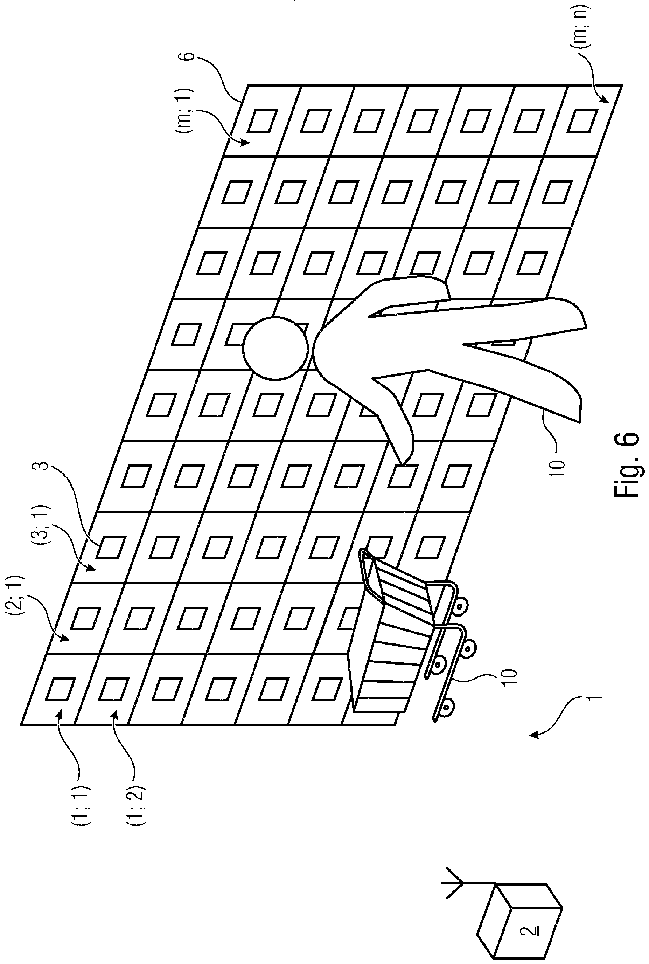

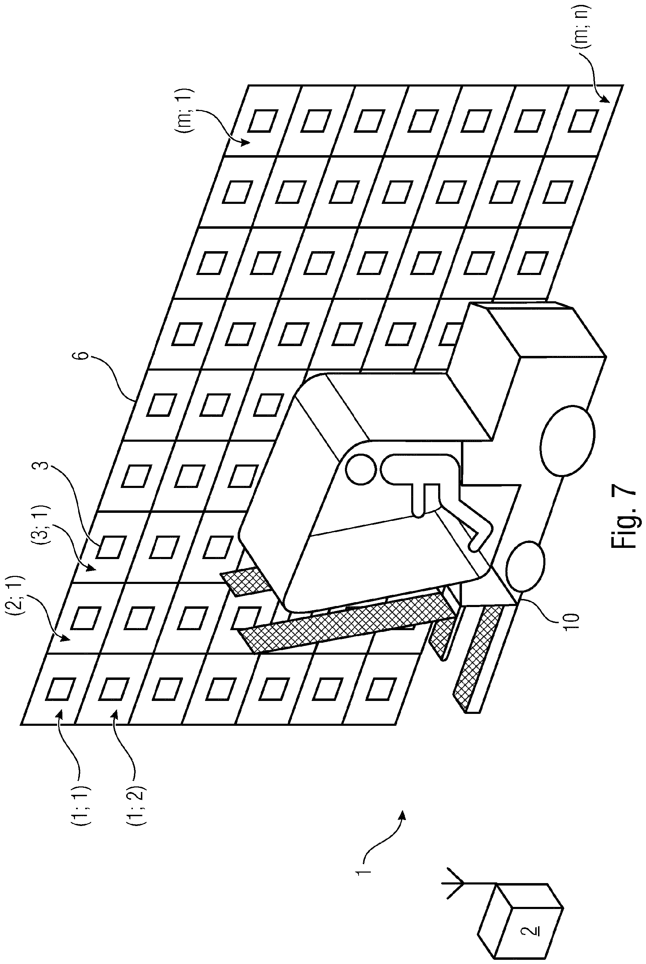

Die Abbildungen Fig. 5, Fig. 6 und Fig. 7 zeigen jeweils eine Vorrichtung 1 mit einer Sendevorrichtung 2 und in einer Wand als Halterungsvorrichtung 6 angebrachten Empfangsvorrichtungen 3. Dabei befindet sich im Signaldurchgangsbereich als Objekt 10 einmal ein PKW (Fig. 5), einmal eine Person mit Einkaufswagen (Fig. 6) sowie einmal ein Gabelstapler (Fig. 7).

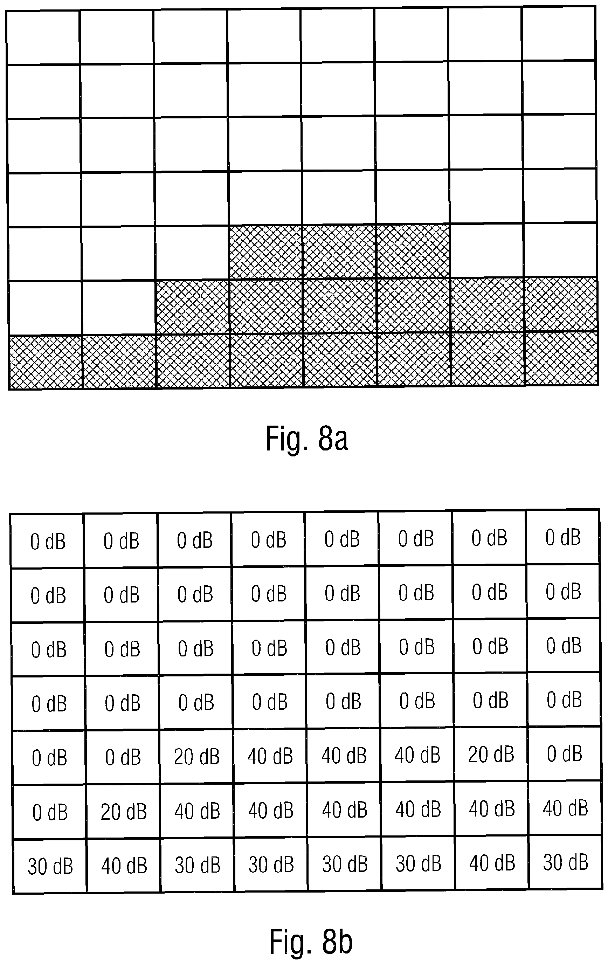

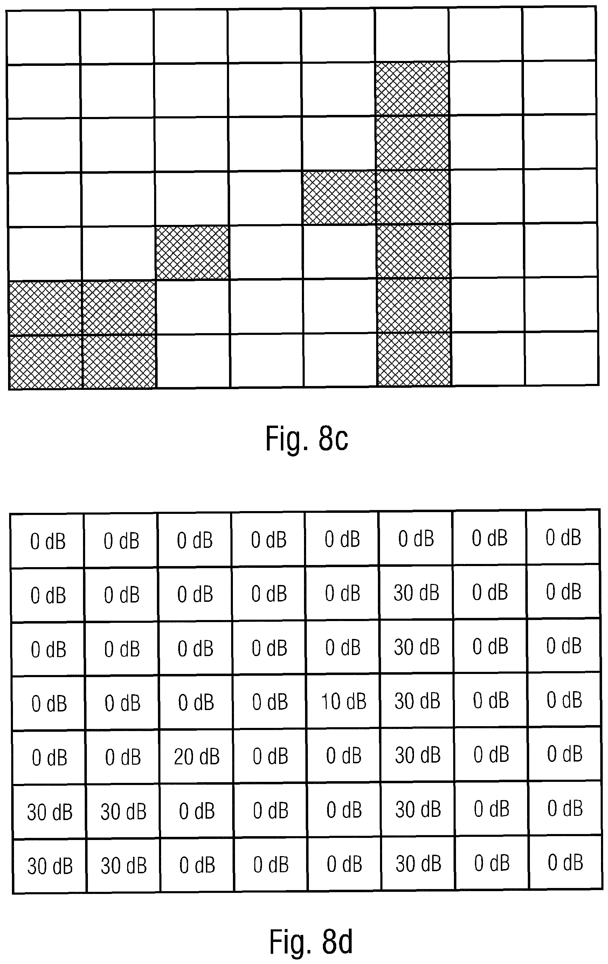

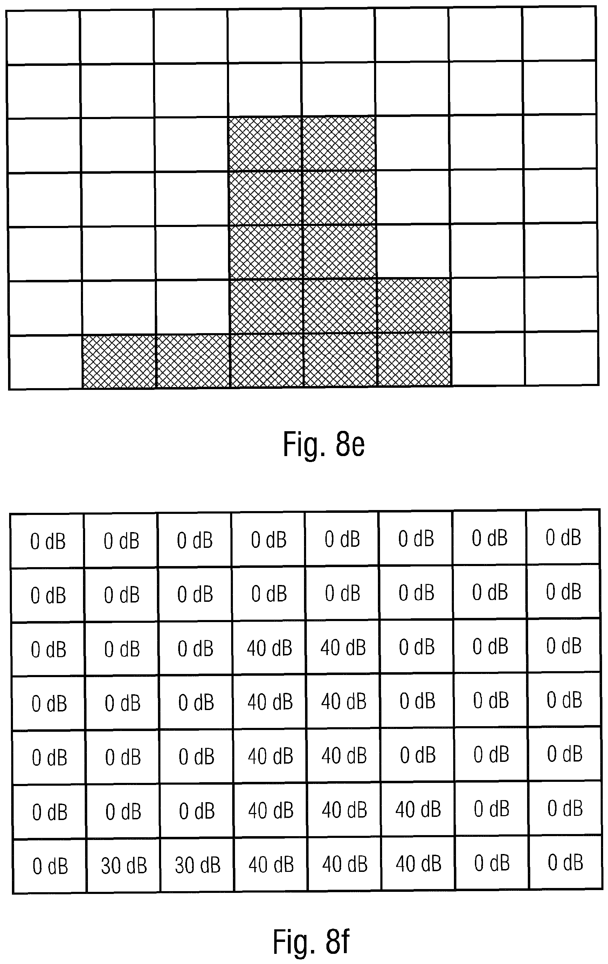

Die sich jeweils ergebenden Matrizen der Dämpfungen $ATTEN_{i,j}$ sind in der Fig. 8b (PKW), in der Fig. 8d (Person mit Einkaufswagen) sowie in der Fig. 8f (Gabelstapler) dargestellt. Werden die Matrizenwerte mit nur einer Entscheidungsschwelle diskretisiert und wird eine Einfärbung der Felder nach dem Schema: weiße Färbung für den Wert 0 und graue Färbung für den Wert 1 vorgenommen, so zeigen sich die unterschiedlichen Formen in den Abbildungen Fig. 8a (PKW), Fig. 8c (Person mit Einkaufswagen) sowie Fig. 8e (Gabelstapler).

In Schritt 5 wird die Formklassifikation anhand der diskretisierten Matrix vorgenommen. Dazu können die Fläche, die Ausdehnung in x- oder in y-Richtung, die diagonale Ausdehnungen des Objekts bestimmt werden. Eine Objektklassifikation kann anhand dieser Kennzahlen zusammen mit einer 2D-Mustererkennung mit hinterlegten Referenzformen erfolgen.

Nach Erfassung aller m * n Felder wird das Verfahren zur Gewinnung der Daten für das nächste Abbild $ATTEN_{i,j}$ wiederholt. Durch die zu unterschiedlichen, insbesondere aufeinander folgenden Messzyklen bzw. den daraus jeweils erhaltenen Dämpfungs-Abbildern lässt sich z. B. ermitteln, ob sich ein Objekt bewegt hat.

Ausgehend von der Abfragehäufigkeit der Sendevorrichtung 2 als zentralen Funkeinheit sowie ausgehend von der prinzipiell möglichen ständigen Anwesenheit eines Objekts als Funkhindernis kann auf die maximale Stromaufnahme jeder Empfangsvorrichtung 3 als Funkmodul aus der jeweiligen Sendedauer geschlossen werden.

Für diesen Fall wird in einer Ausgestaltung der Schritt 2 modifiziert:
Bleiben die RSSI-Werte bzw. die ermittelten Dämpfungen $RSSI_{ist} - RSSI_{erwartet}$ von einem Messzyklus (der jeweils als Abbildung verstanden sei) im Vergleich zu einem vorhergehenden Messzyklus ähnlich bzw. sind die diskretisierten Werte $disk\_ATTEN_{i,j}$ für das jeweilige Feld unverändert, so entfällt in dieser Ausgestaltung die Ausgabe des Antwortsignals als Rückantwort der jeweiligen Empfangsvorrichtung. Erst wenn ein veränderter Wert für $disk\_ATTEN_{i,j}$ vorliegt, wenn also eine Abweichung oberhalb eines vorgegebenen Entwicklungsgrenzwerts vorliegt, erfolgt die Funkübermittlung dieses neuen Wertes von der Empfangsvorrichtung zur Sendevorrichtung.

Diese Ausgestaltung dient zur Reduktion des Funkverkehrs und der Stromaufnahme bei den Empfangsvorrichtungen bzw. Funkmodulen für den Fall, das Objekte sich nicht oder sehr langsam bewegen. Dies begünstigt wiederum den Einsatz von wartungsarmen stromsparenden Funkempfängern in der Funkmodulewand als Haltevorrichtung bei gleichzeitig niedrigem Installationsaufwand, da keine Verkabelung bzw. kein Anschließen an Stromleitungen erforderlich. Damit ist auch ein flexibler Einsatz der gesamten Anordnung möglich.

In einem weiteren Schritt wird durch Vergleich verschiedener Abbilder $ATTEN_{i,j}$ bzw. $disk\_ATTEN_{i,j}$ mit den Vorgängerabbildern auf die Bewegungsrichtung und auf die Geschwindigkeit geschlossen. Dazu sind insbesondere für diskrete Matrizen Methoden zur Korrelationsberechnung (auch Matched-Filter-Ansätze) bekannt, um mit wenigen Rechenschritten auf die Bewegungsrichtung bei gleichzeitiger Beibehaltung der Objektform schließen zu können. Dies erlaubt es, Zählvorgänge für Objekte mit gleichzeitiger Feststellung der Bewegungsrichtung zu realisieren.

Anwendungsbereiche liegen in Warenverkehr, Logistik, Personenverkehr, Personenerfassung an Orten mit viel Publikumsverkehr wie z. B. Bahnhöfen, Marktplätzen, Flughäfen, Einkaufszentren, Messen, Stadien sowie an Durchfahrten von Parkplätzen und Parkhäusern oder auch an Grenzübergangsstellen/Mauterfassungsstellen. Außerdem ist der Einsatz als Alarmanlage zur unauffälligen Detektion von eintretenden oder verlassenden Objekten oder Personen möglich.

In einer Ausgestaltung wird die Frequenz der von der Sendevorrichtung ausgestrahlten Signale entsprechend gewählt, um z. B. die Unterscheidung nach Materialklasse Metall, Holz, Kunststoff und Biogewebe anhand der unterschiedlichen Signaldämpfung vorzunehmen. In einer Ausgestaltung werden mindestens zwei Signalfrequenzen verwendet.

Die Signalverarbeitung der diskretisierten Abbilder als Verarbeitung der ermittelten Dämpfungswerte, insbesondere bei rein binärer Diskretisierung, ist mit geringem bis mittlerem Rechenaufwand möglich und kann dadurch gut als batterie-betriebenes Rechenwerk (dediziertes Schaltwerk oder programmierbarer Mikrocontroller oder Mikroprozessor) umgesetzt werden, weil nur Rechenoperationen in Ganzzahlarithmetik anfallen.

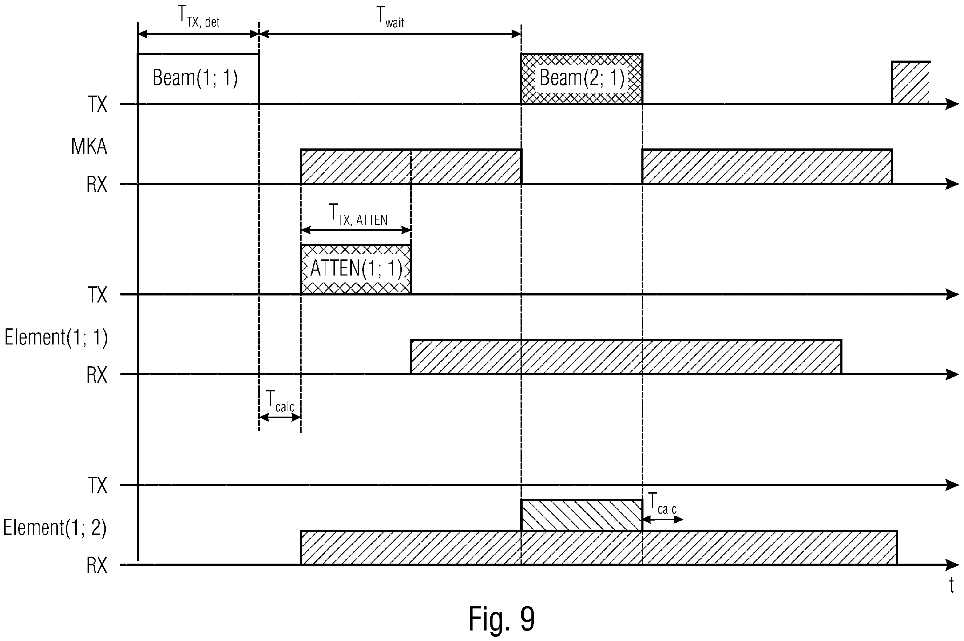

In der Fig. 9 ist ein zeitlichen Verlauf einiger Verfahrensschritte dargestellt. MKA steht hier für die Sendevorrichtung, die als Sender (TX) der Signale an die Empfangsvorrichtungen und als Empfänger (RX) der von dort ausgehenden Antwortsignale fungiert.

Die Sendevorrichtung MKA sendet ein in einen Raumbereich gerichtetes Signal (hier bezeichnet als Beam) gezielt in den Raumbereich (1; 1) und sendet einen weiteren Beam anschließend in einen anderen Raumbereich (2; 1). Dies geschieht jeweils für die Zeitdauer $T_{TX, det}$. Danach wartet die Sendevorrichtung MKA ab und lauscht auf Antwortsignale. Dies für die Zeitdauer $T_{wait}$, die hier länger als die Sendezeitdauer $T_{TX, det}$ ist.

Hier ist das Verhalten von zwei Empfangsvorrichtungen (bezeichnet mit Element) an zwei Orten (1; 1) und (1; 2) gezeigt, wobei beide Elemente ebenfalls dem Senden (TX) als auch dem Empfangen (RX) von Signalen dienen.

Das zuerst adressierte Empfangselement im Raumbereich (1; 1) empfängt den Beam (1; 1) und berechnet in der Zeit $T_{calc}$ das Dämpfungsmaß. Dieses sei hier größer als der vorgegebene Dämpfungsgrenzwert, so dass die Empfangsvorrichtung Element (1; 1) in der Zeitdauer $T_{TX, ATTEN}$ ein Antwortsignal mit dem Dämpfungsmaß aussendet.

Beim anderen Empfangselement Element (1; 2) wird ebenfalls ein Signal (Beam (2; 1)) empfangen, wobei jedoch der Dämpfungswert kleiner als der Grenzwert sei. Daher sendet das zweite Empfangselement Element (1; 2) kein Antwortsignal aus.

Für den Fall, dass die Signaldämpfung durch Abschattung aufgrund des Betretens bzw. Befahrens eines Feldes (i; j) (z. B. auf einer Bodenplatte) durch ein Objekt sehr hohe Werte annimmt und damit die Funk-Kommunikation zwischen der Empfängervorrichtung in dem durch das Objekt besetzten Feld (i; j) und zentraler Funkeinheit in Form der Sendevorrichtung verhindert ist, sieht eine Ausgestaltung ein Ausweichen auf die Empfängervorrichtung in wenigstens einem benachbarten Feld - z.B. (i+1; j) oder (i+1; j+1) - vor. Dies kann lokal von Feld zu Feld z. B. per Funk propagiert werden.

In bestimmten Fällen wickeln - in einer weiteren Ausgestaltung - alle unmittelbaren Nachbarn von Feld (i; j) die Funkkommunikation mit der zentralen Funkeinheit ab. Im Fall einer regelmäßigen matriziellen Feldanordnung kommen dann vier bzw. acht Nachbarfelder in Frage. Damit wird der prinzipielle Ausfall der Kommunikation durch sehr hohe Funkabschattung auf einem Feld bzw.

in einer Ausbreitungskeule vermieden.

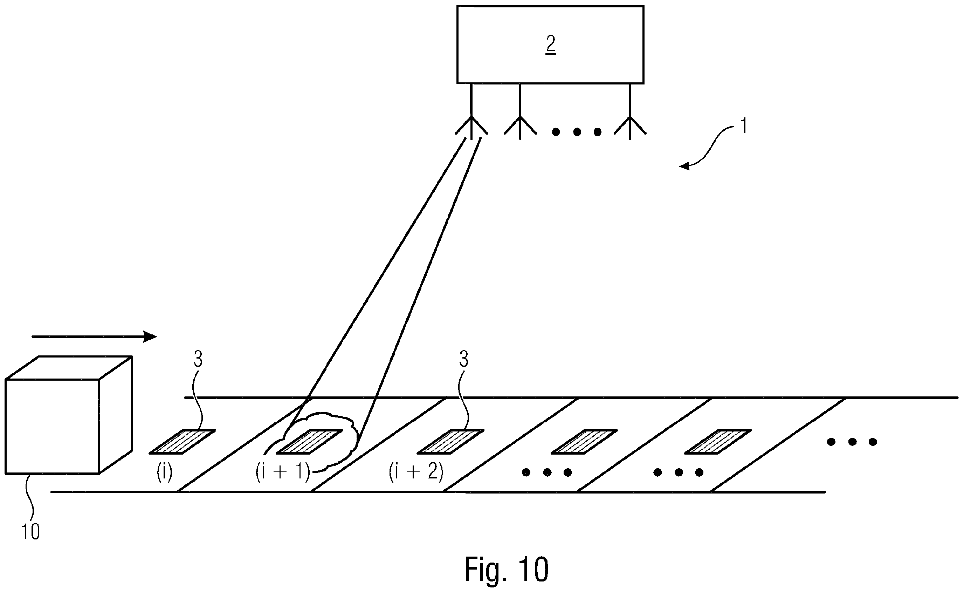

Die Fig. 10 zeigt eine beispielhafte Anordnung der Empfängervorrichtungen 3 entlang einer Strecke, die hier durch ein Förderband gegeben sei, für den Sonderfall einer eindimensionalen Erfassung eines Objekts 10.

Entlang der Strecke, über die sich das Objekt 10 bewegt (angedeutet durch den Pfeil), sind Empfangsvorrichtungen 3 angeordnet, die hier entsprechend ihrer Position mit i, i+1, i+2 usw. bezeichnet sind. Oberhalb der Beförderungsstrecke befindet sich eine Sendevorrichtung 2, die über mehrere Antennenelemente verfügt und die als Mehrkeulenantenne ausgestaltet ist. Befindet sich das Objekt 10 über einer Empfangsvorrichtung 3, während die Mehrkeulenantenne 2 zu dieser Empfangsvorrichtung 3 sendet, so wird das Signal durch das Objekt 10 gedämpft. Damit kann festgestellt werden, wo sich das transportierte Objekt 10 entlang der Strecke befindet.

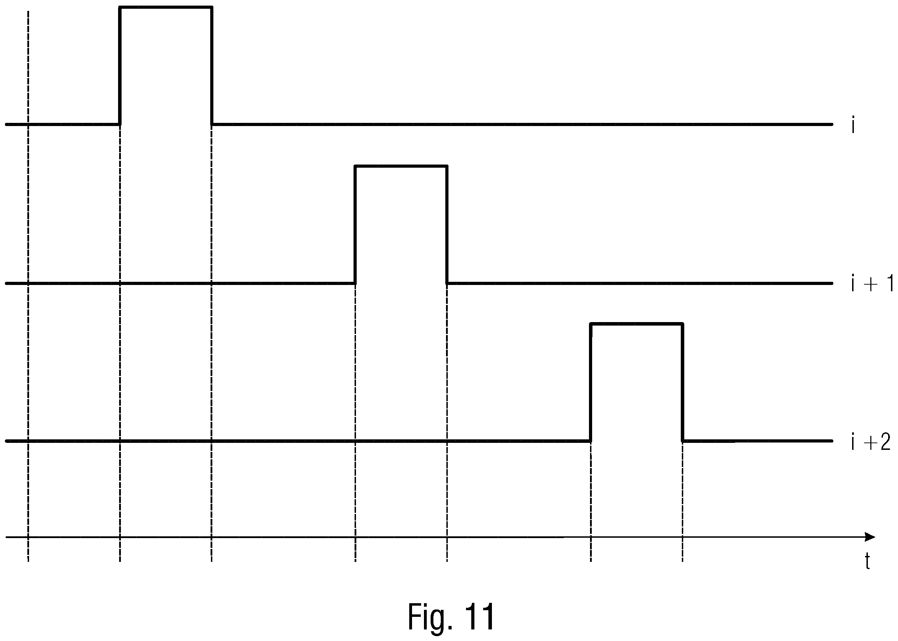

Die Fig. 11 zeigt die Antwortsignale der Empfangsvorrichtungen 3 der Fig. 10 in Abhängigkeit von der Zeit t. Die Empfangsvorrichtungen an den Positionen i, i+1 und i+2 geben jeweils infolge der Anwesenheit des Objekts 10 einen Puls aus. Befindet sich das transportierte Objekt oberhalb einer Empfangsvorrichtung, so verringert sich die Empfangsfeldstärke des von der Mehrkeulenantenne ausgesendeten Signals für die Empfangsvorrichtung. In diesem Fall wird das Antwortsignal ausgesendet.

Aus den Antworten der Empfangsvorrichtungen kann auf die Geschwindigkeit des Objekts, dessen Größe (Länge) und beispielsweise dessen Zusammensetzung geschlossen werden. Dies ermöglicht eine Flusskontrolle. Somit kann die Beförderungsgeschwindigkeit geregelt werden oder so lassen sich Objekte zählen. Die Anwendung bezieht sich beispielsweise auf einen Rollenförderer oder auf ein Fließband o. ä.

Gegenüber optischen Sensoren in Form von Lichtschranken hat eine funkbasierte Lösung dabei den Vorteil, dass sie nicht schmutzempfindlich ist und eine praktikable Toleranz bei der Ausrichtung zwischen Mehrkeulenantenne und Funkobjekten zulässt.

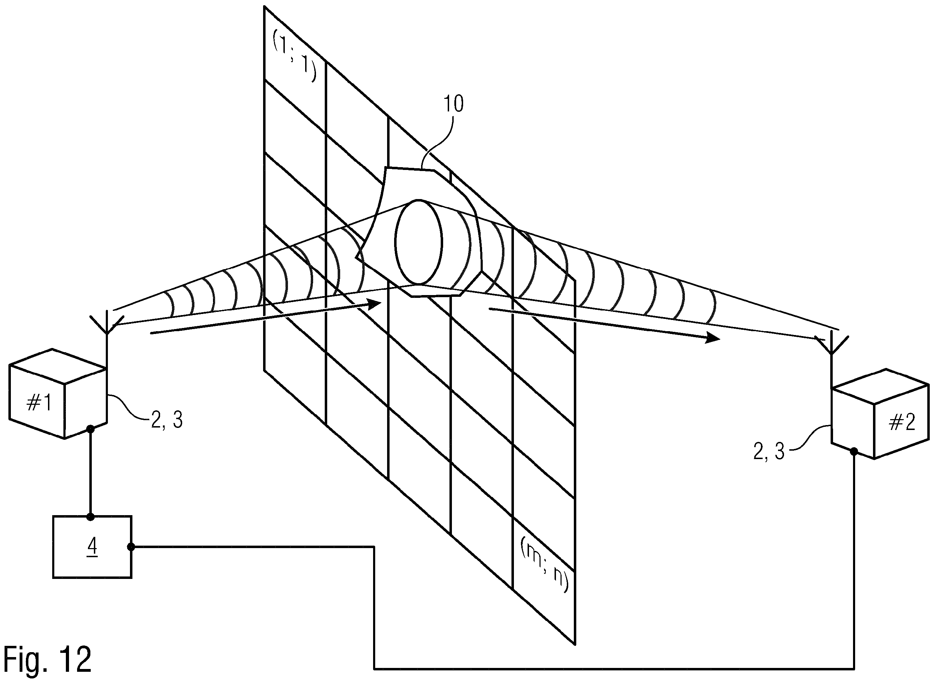

Die Fig. 12 zeigt den Fall, dass als primäre Sendevorrichtung 2 (dargestellt auf der linken Seite und mit #1 bezeichnet) und als primäre Empfangsvorrichtung 3 (dargestellt auf der rechten Seite und mit #2 bezeichnet) jeweils Vorrichtungen mit schaltbaren Mehrkeulenantennen eingesetzt werden, die somit das Aussenden in besondere Raumrichtungen bzw. das Empfangen aus ausgewählten Raumrichtungen erlauben. Dadurch ergibt sich der Vorteil, dass die eigentliche Halterungsvorrichtung entfallen kann und dass sich das mit der Halterungsvorrichtung einhergehende Koordinatensystem jetzt nur noch in Datenform durch das Schalten der einzelnen Keulen für das Senden bzw. das Empfangen der Signale ergibt. Hier ist das Raster daher nur angedeutet, wobei es insbesondere nicht gegenständlich gegeben ist.

Zudem sind in der dargestellten Ausgestaltung auf beiden Seiten jeweils Sende- und Empfangsvorrichtungen 2, 3 vorhanden, so dass auch von beiden Vorrichtungen (#1, #2) jeweils Signale gesendet und Signale empfangen werden können. Die Signale beziehen sich dabei auf die eigentlichen Messsignale, deren Dämpfungsmaß ermittelt wird, als auch auf die Antwortsignale, die die Informationen über die empfangenen Signale tragen.

Die Sende-/Empfangsvorrichtung 2, 3 #1 sendet z. B. im Zeilensprungverfahren Funktelegramme für alle m * n Felder ab, die von der Sende-/Empfangsvorrichtung 2, 3 #2 empfangen werden. Dies ist jeweils angedeutet durch die Pfeile. Dabei genügt ein einmaliges Koordinieren/Verabreden der zwei Sende-/Empfangsvorrichtungen 2, 3 bezüglich der Reihenfolge, in der die Felder mit den Signalen beaufschlagt werden.

Wenn das zu erfassende Objekt 10 von Strahlbündeln der Sende-/Empfangsvorrichtung 2, 3 #1 angepeilt wird, kann die Sende-/Empfangsvorrichtung 2, 3 #2 mit ihrem jeweils eingestellten Strahlbündel die reflektierten und gedämpften Funksignale von der Sende-/Empfangsvorrichtung 2, 3 #1 auffangen und decodieren. Aufgrund der bekannten Information über die Feldnummer des Strahlbündels der Sende-/Empfangsvorrichtung 2, 3 #1 für das Signalaussenden und der Feldnummer des Strahlbündels der Sende-/Empfangsvorrichtung 2, 3 #2 für den Signalempfang kann ähnlich wie bei gekreuzten Lichtkegeln auf die Position des Objekts 10 im Raum (als x;y;z-Koordinaten) und die Grö-ße des Objekts 10 geschlossen werden.

Diese Verfahrensweise ist insbesondere für Gänge und Flure geeignet, wo Objekte nicht dauerhaft abgestellt werden. Dies ist in öffentlichen Gebäuden wie Bahnhöfen, Flughäfen oder großen Einkaufspassagen und bei Fluchtwegen im allgemeinen der Fall.

In der dargestellten Ausgestaltung ist die Auswertevorrichtung 4 mit der Sende-/Empfangsvorrichtung 2, 3 #1 und der Sende-/Empfangsvorrichtung 2, 3 #2 verbunden und erhält daher die Informationen über das von der Sende-/Empfangsvorrichtung 2, 3 #1 gesendete Signal (also zumindest die Amplitude) und die dafür verwendete Richtcharakteristik. Weiterhin erhält die Auswertevorrichtung 4 von der Sende-/Empfangsvorrichtung 2, 3 #2 die Informationen über das empfangene Signal und die zugehörige Richtcharakteristik. Aus den zwei Richtcharakteristiken ergibt sich dann die Position des Objekts 10 und aus den beiden Signalen ergeben sich weitere Aussagen über das Objekt 10, z. B. über dessen Material.

In einer Ausgestaltung geschieht Folgendes: Die Sende-/Empfangsvorrichtung 2, 3 #1 platziert ihr Strahlbündel an eine Feldposition (i; j). Die Sende-/Empfangsvorrichtung 2, 3 #2 tastet aufgrund der mangelnden Kenntnis über das zu detektierende Objekte 10 ihrerseits alle Felder (p; q) ab. Stellt die Sende-/Empfangsvorrichtung 2, 3 #2 für bestimmte Felder den Empfang von reflektierten Signalen fest, so kann auf die Lage des Objekts 10 als Hindernis geschlossen werden. Sind alle Felder (p; q) durch die Sende-/Empfangsvorrichtung 2, 3 #2 abgetastet, so steuert die Sende-/Empfangsvorrichtung 2, 3 #1 das nächste Feld an usw.

Optional ist in einer Ausgestaltung vorgesehen, dass neben reinen systembezogenen Funkpräambeln auch die jeweiligen Feldpositionen der beiden Strahlbündel ausgesendet werden. Dann kann eine Koordinierung/Absprache auf ein Minimum reduziert werden und beide Funkeinheiten (also beider Sende-/Empfangsvorrichtungen 2, 3 #1 und #2) wissen über den Strahlreflexion durch das Objekt 10 Bescheid. Dazu tauschen in einer Ausgestaltung die beiden Funkeinheiten die Rolle als Sender und als Empfänger feldweise.

In einer weiteren Ausgestaltung verfügt die Sende-/Empfangsvorrichtung 2, 3 #2, die in dem hier gezeigten Fall nur als Empfangsvorrichtung 3 fungiert, über unterschiedliche Richtcharakteristiken und empfängt auch mit mehreren Richtcharakteristiken gleichzeitig Signale. Die empfangenen Signale werden dabei jeweils in die einzelnen Richtcharakteristiken zerlegt (z. B. durch eine Butler-Matrix oder alternativ durch ein Eigenmodennetzwerk). Dies erlaubt das Hören auf unterschiedliche Raumbereiche. Dabei kann durch die Auswertung der Signalamplituden der einzelnen Signale der Raumbereich mit der größten Amplitude ermittelt werden. Dieser Raumbereich wird dann gesondert von der Sende-/Empfangsvorrichtung 2, 3 #2 ausgewertet.

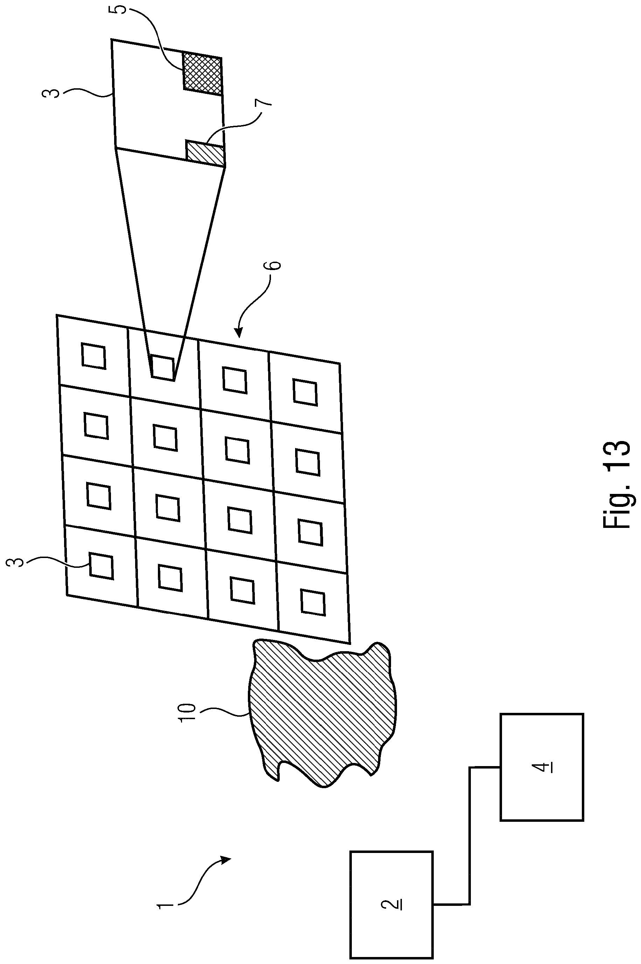

Die Fig. 13 zeigt eine weitere Ausgestaltung der erfindungsgemäßen Vorrichtung 1.

Eine Sendevorrichtung 2 strahlt Signale in Richtung einer Halterungsvorrichtung 6 aus, die hier als Wandelement ausgeführt ist. Die Signale werden dabei je nach Anwendungsfall ungerichtet oder in einzelne Raumbereiche ausgestrahlt. Die ungerichtete Ausstrahlung ist dabei abhängig von der Ausgestaltung der verwendeten Antenne und deren genereller Ausstrahlungseigenschaften. Die gezielte Ausstrahlung in einzelne Raumbereich wird dadurch ermöglicht, dass die Sendevorrichtung 2 über einzelne Richtcharakteristiken verfügt, die jeweils mit unterschiedlichen räumlichen Sendeeigenschaften verbunden sind. Durch die Richtcharakteristiken werden also die Signale jeweils unterschiedlich stark in unterschiedliche Bereiche ausgestrahlt. In der gezeigten Ausgestaltung handelt es sich insbesondere um Richtcharakteristiken, die mit einer Keulenform verbunden sind.

Die Richtcharakteristiken bzw. die Ausstrahlung der Signale mit den unterschiedlichen Richtcharakteristiken erlaubt es gleichsam, ein Signal über die Halterungsvorrichtung 6 wandern zu lassen und damit auch die einzelnen Empfangsvorrichtungen 3 in der Halterungsvorrichtung 6 einzeln zu adressieren.

Die Sendevorrichtung 2 ist hier mit einer Auswertevorrichtung 4 verbunden, die aus den von der Sendevorrichtung 2 abgestrahlten Signalen und aus den von den Empfangsvorrichtungen 3 empfangenen Signalen Informationen über ein Objekt 10 zwischen der Sendevorrichtung 2 und der Empfangsvorrichtung 3 erzeugt.

Hierfür sind die Signalbewertungsvorrichtungen 5 vorgesehen. In dem gezeigten Beispiel verfügt jede Empfangsvorrichtung 3 über eine solche Signalbewertungsvorrichtung 5, die im gezeigten Beispiel aus den empfangenen Signalen in Relation zu während einer Kalibrierung erzeugten Werten ein Dämpfungsmaß ermitteln. Während der Kalibrierung empfangen beispielsweise die Empfangsvorrichtungen 3 jeweils ein Signal, ohne dass sich ein Objekt im Strahlengang befindet. Die Amplitude des empfangenen Signals wird dann jeweils als Referenzwert in einem Datenspeicher 7 abgespeichert. Bei der Anwendung wird wiederum die Amplitude des aktuell gemessenen Signals mit dem Referenzwert verglichen, um das Dämpfungsmaß zu ermitteln.

Die Empfangsvorrichtungen 3 sind nun derartig ausgestaltet, dass sie nach dem Empfangen eines Signals ein Antwortsignal erzeugen und ausstrahlen. In diesem Fall wird die Sendevorrichtung 2 zu einer Empfangsvorrichtung, so dass in dem gezeigten Beispiel die zentrale Funkeinheit 2 und die verteilten Funkmodule 3 sowohl Sendervorrichtungen als auch Empfangsvorrichtungen, mithin Sende-/Empfangsvorrichtungen sind.

Die Empfangsvorrichtungen 3 senden in der gezeigten Ausgestaltung das Antwortsignal unter zwei Bedingungen aus, um u. a. Energie zu sparen: Zum einen muss das Dämpfungsmaß einen gewissen ersten Grenzwert übersteigen. Die Dämpfung muss also eine Mindestgröße aufweisen. Zum anderen muss sich das Dämpfungsmaß um einen gewissen zweiten Grenzwert von einem vorhergehenden Dämpfungsmaß unterscheiden, d. h. es muss eine Änderung aufgetreten sein.

Sind beide Kriterien erfüllt, so sendet die Empfangsvorrichtung 3 das Antwortsignal an die Sendevorrichtung 2, die das Antwortsignal oder eine damit verbundene Information an die Auswertevorrichtung 4 übermittelt.

Nachdem die Sendevorrichtung 2 - durch das Schalten der unterschiedlichen Richtcharakteristiken - alle Empfangsvorrichtungen 3 mit einem Signal angestrahlt und entsprechende Antwortsignale erhalten hat, wertet die Auswertevorrichtung 4 die Dämpfungsma-ße und die Lokalisationen der Empfangsvorrichtungen 3 aus, um zumindest die Anwesenheit des Objekts 10 zu erkennen bzw. um aus den Umrissen des Objekts 10 und somit aus der Anordnung der Dämpfungsmaße das Objekt zu klassifizieren bzw. eine Aussage über dessen Materialien zu tätigen.

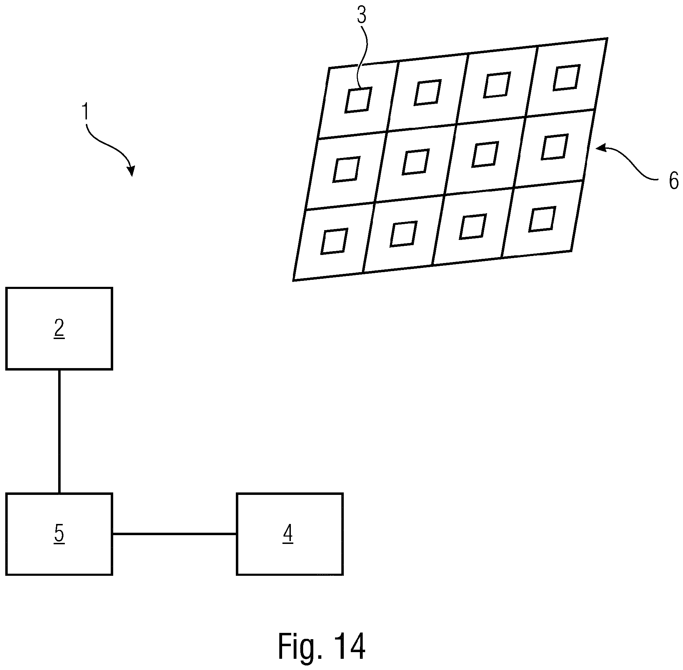

In der Fig. 14 ist eine Signalbewertungsvorrichtung 5 vorgesehen, die mit der Sendevorrichtung 2 verbunden ist. In dieser Ausgestaltung reflektieren die Empfangsvorrichtungen 3 die von der Sendervorrichtung 2 ausgestrahlten Signale, die anschließend von der Sendevorrichtung 2 wieder empfangen werden. Die Signale passieren somit zweimal den Raum zwischen der Sendevorrichtung 2 und der jeweiligen Empfangsvorrichtung 3.

Einige Vorteile der Erfindung sind die folgenden, die sich jeweils aus einzelnen Ausgestaltungen bzw. deren Kombinationen ergeben:
Die Objekterkennung ist sehr leistungsfähig, wobei durch die speziellen Wake-up-Receiver eine reduzierte Stromaufnahme gegeben ist und dies zudem auch dann, wenn die Empfangsvorrichtungen ihre Antwortsignale aussenden.

Durch die umschaltbaren Richtcharakteristiken gibt es keine mechanischen oder bewegten Teile.

Die Objektform/-größe sowie Bewegungsrichtung und Geschwindigkeit lassen sich sehr schnell und einfach erfassen.

Dabei besteht nur ein minimaler Installationsaufwand, der in einer Ausgestaltung mit den angesprochenen Empfangsvorrichtungen insbesondere keinen Verdrahtungsaufwand auslösen.

Prinzipiell kann die Funktionstüchtigkeit der einzelnen Empfangsvorrichtungen leicht überwacht werden.

Werden insbesondere die stromsparenden Funkempfänger (Wake-up-Receiver) verwendet, so ist bei einer großen Feldanzahl bzw. einer großen Anzahl von Funkempfängern die Ausführung mit autarken Funkempfängern z. B. in der Funkmodulewand als Halterungsvorrichtung vorteilhaft gegenüber einer netzgespeisten Installation. Auch für großflächige Funkmodulwände z. B. mehr als 10 m x 10 m ist der eingesparte Kabel-/Installationsaufwand relevant. Grundsätzlich ist auch ein wartungsarmer Betrieb möglich, weil kein Netzbetrieb vorliegt. Zudem entfallen Betriebsmittelprüfungen.

Die Erfindung lässt sich für eine Ausgestaltung so beschreiben, dass ein Abtastverfahren sowie eine wechselnde Position von Hauptstrahlrichtungen von Antennenbeams stattfindet.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software oder zumindest teilweise in Hardware oder zumindest teilweise in Software implementiert sein. Die Implementierung kann unter Verwendung eines digitalen Speichermediums, beispielsweise einer Floppy-Disk, einer DVD, einer BluRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinen-lesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger oder das digitale Speichermedium oder das computerlesbare Medium sind typischerweise greifbar und/oder nicht flüchtig.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC oder ein ARM-Mikroprozessor.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

**Patentansprüche**

1. Vorrichtung (1) zum Erkennen mindestens eines Objekts (10),

   wobei die Vorrichtung (1) mindestens eine als Mehrkeulenantenne ausgebildete Sendevorrichtung (2), eine Halterungsvorrichtung (6), mehrere Empfangsvorrichtungen (3), welche an unterschiedlichen Positionen der Halterungsvorrichtung (6) angeordnet sind, und mindestens eine Auswertevorrichtung (4) aufweist,
   wobei die Sendevorrichtung (2) derart ausgestaltet ist, Signale auszusenden, wobei die Empfangsvorrichtungen (3) derart ausgestaltet sind, Signale zu empfangen,
   wobei die Sendevorrichtung (2) unterschiedliche schaltbare Richtcharakteristiken aufweist und derartig ausgestaltet ist, um durch Schalten der Richtcharakteristiken die als Mehrkeulenantenne ausgebildete Sendevorrichtung (2) in einer Reihenfolge auf die Empfangsvorrichtungen (3) auszurichten,

wobei die Auswertevorrichtung (4) derartig ausgestaltet ist, die von der Sendevorrichtung (2) ausgesendeten Signale mit den von den Empfangsvorrichtungen (3) empfangenen Signalen zu vergleichen und für die von den Empfangsvorrichtungen (3) empfangenen Signale ein der jeweiligen Empfangsvorrichtung (3) und/oder der Position der jeweiligen Empfangsvorrichtung (3) zugeordnetes Vergleichsergebnis zu erzeugen,

wobei die Auswertevorrichtung (4) derartig ausgestaltet ist, aus dem Vergleichsergebnis mindestens zu ermitteln, ob sich das Objekt (10) zwischen der Sendevorrichtung (2) und den Empfangsvorrichtungen (3) befindet,

wobei die Vorrichtung (1) derart ausgestaltet ist, dass in einem Schritt die Sendevorrichtung (2) durch Schalten einer der Richtcharakteristiken auf eine der Empfangsvorrichtungen (3) ausgerichtet ist und eines der Signale gebündelt an die eine der Empfangsvorrichtungen (3) aussendet, und

wobei die Vorrichtung (1) derart ausgestaltet ist, dass in einem weiteren Schritt die Sendevorrichtung (2) durch Schalten einer weiteren der Richtcharakteristiken auf eine weitere der Empfangsvorrichtungen (3) ausgerichtet ist und ein weiteres der Signale gebündelt an die weitere der Empfangsvorrichtungen (3) aussendet.

2. Vorrichtung (1) nach Anspruch 1,
wobei die Auswertevorrichtung (4) derartig ausgestaltet ist, aus den von der Sendevorrichtung (2) ausgesendeten Signalen und den von einer der Empfangsvorrichtungen (3) empfangenen Signalen ein Dämpfungsmaß als Vergleichsergebnis zu ermitteln.

3. Vorrichtung (1) nach Anspruch 2,

wobei die Auswertevorrichtung (4) derartig ausgestaltet ist, für Amplituden der empfangenen Signale jeweils ein Amplitudenmaß zu ermitteln, und

wobei die Auswertevorrichtung (4) derartig ausgestaltet ist, aus dem jeweiligen Amplitudenmaß und einem der jeweiligen Empfangsvorrichtung (3) zugeordneten Kalibrierungsmaß das Dämpfungsmaß zu ermitteln.

4. Vorrichtung (1) nach Anspruch 2 oder 3,
wobei die Auswertevorrichtung (4) derartig ausgestaltet ist, aus den Dämpfungsmaßen und den Positionen der Empfangsvorrichtungen (3) einen Umriss des Objekts (10) ermitteln.

5. Vorrichtung (1) nach Anspruch 4,
wobei die Auswertevorrichtung (4) derartig ausgestaltet ist, ausgehend von dem ermittelten Umriss des Objekts (10) und ausgehend von Umrissdaten das Objekt (10) zu klassifizieren.

6. Vorrichtung (1) nach einem der Ansprüche 2 bis 5,
wobei die Auswertevorrichtung (4) derartig ausgestaltet ist, aus mindestens einem ermittelten Dämpfungsmaß eine Aussage über ein Material des Objekts (10) zu ermitteln.

7. Vorrichtung (1) nach einem der Ansprüche 1 bis 6,

wobei die Auswertevorrichtung (4) eine Signalbewertevorrichtung (5) aufweist,
wobei die Signalbewertevorrichtung (5) derartig ausgestaltet ist, das Vergleichsergebnis zu erzeugen,
wobei die Signalbewertevorrichtung (5) der Empfangsvorrichtung (3) zugeordnet ist,
wobei die Empfangsvorrichtungen (3) derartig ausgestaltet sind, abhängig vom Vergleichsergebnis ein Antwortsignal zu erzeugen, und
wobei die Empfangsvorrichtungen (3) das Antwortsignal nur beim Vorliegen einer vorgebbaren Bedingung ausgeben.

8. Vorrichtung (1) nach einem der Ansprüche 1 bis 7,

wobei die Auswertevorrichtung (4) mehrere Signalbewertevorrichtungen (5) aufweist,
wobei die Signalbewertevorrichtungen (5) derartig ausgestaltet sind, Vergleichsergebnisse zu erzeugen,
wobei den Empfangsvorrichtungen (3) jeweils mindestens eine Signalbewertevorrichtung (5) zugeordnet ist,
wobei die Empfangsvorrichtungen (3) derartig ausgestaltet sind, jeweils abhängig vom Vergleichsergebnis ein Antwortsignal zu erzeugen, und
wobei die Empfangsvorrichtungen (3) die Antwortsignale nur beim Vorliegen einer jeweils vorgebbaren Bedingung ausgeben.

9. Vorrichtung (1) nach Anspruch 7 oder 8,

wobei die vorgebbare Bedingung mindestens darin besteht, dass ein als Vergleichsergebnis ermitteltes Dämpfungsmaß größer als ein vorgebbarer Dämpfungsgrenzwert ist,
und/oder
wobei die vorgebbare Bedingung mindestens darin besteht, dass das Vergleichsergebnis sich über einen vorgebbaren Entwicklungsgrenzwert von einem vorherigen Vergleichsergebnis unterscheidet.

10. Vorrichtung (1) nach einem der Ansprüche 1 bis 9, wobei mindestens eine der Empfangsvorrichtungen (3) als Sendevorrichtung (2) dient.

11. Vorrichtung (1) nach einem der Ansprüche 1 bis 10, wobei mindestens eine der Empfangsvorrichtungen (3) derartig ausgestaltet ist, nach dem Empfangen eines Signals von einem passiven Zustand in einen aktiven Zustand zu wechseln.

12. Vorrichtung (1) nach einem der Ansprüche 1 bis 11, wobei mindestens eine der Empfangsvorrichtungen (3) derartig ausgestaltet ist, aus einem vorgebbaren Raumbereich ein Signal zu empfangen.

13. Vorrichtung (1) nach einem der Ansprüche 1 bis 12, wobei die Sendevorrichtung (2) derartig ausgestaltet ist, Signale mit unterschiedlichen Frequenzen auszustrahlen.

14. Vorrichtung (1) nach einem der Ansprüche 1 bis 13,

wobei die Sendevorrichtung (2) mehrere unterschiedliche Richtcharakteristiken (8) aufweist, und
wobei die Richtcharakteristiken (8) sich jeweils auf eine Menge an räumlich unterschiedlichen Sendeeigenschaften beziehen.

15. Verfahren zum Betreiben einer Vorrichtung (1) zum Erkennen mindestens eines Objekts (10), wobei die Vorrichtung (1) mindestens eine als Mehrkeulenantenne ausgebildete Sendevorrichtung (2), eine Halterungsvorrichtung (6), mehrere Empfangsvorrichtungen (3), welche an unterschiedlichen Positionen der Halterungsvorrichtung (6) angeordnet sind, und mindestens eine Auswertevorrichtung (4) aufweist, wobei die Sendevorrichtung (2) unterschiedliche schaltbare Richtcharakteristiken aufweist, wobei das Verfahren folgende Schritte umfasst:

Aussenden von Signalen mittels der Sendevorrichtung (2),
Empfangen von Signalen mittels der Empfangsvorrichtung (3),
Ausrichten der als Mehrkeulenantenne ausgebildeten Sendevorrichtung (2) in einer Reihenfolge auf die Empfangsvorrichtungen (3) durch Schalten der Richtcharakteristiken,
Vergleichen der ausgesendeten Signale mit den empfangenen Signalen,
Erzeugen eines Vergleichsergebnis für die von den Empfangsvorrichtungen (3) empfangenen Signale, welches der jeweiligen Empfangsvorrichtung (3) und/oder der Position der jeweiligen Empfangsvorrichtung (3) zugeordnet ist, und
Ermitteln, basierend auf dem Vergleich, ob sich das Objekt (10) zwischen der Sendevorrichtung (2) und der Empfangsvorrichtung (3) befindet,
wobei in einem der Schritte die Sendevorrichtung (2) durch Schalten einer der Richtcharakteristiken auf eine der Empfangsvorrichtungen (3) ausgerichtet wird und eines der Signale durch die Sendevorrichtung (2) gebündelt an die eine der Empfangsvorrichtungen (3) ausgesendet wird, und
wobei in einem weiteren der Schritte die Sendevorrichtung (2) durch Schalten einer weiteren der Richtcharakteristiken auf eine weitere der Empfangsvorrichtungen (3) ausgerichtet wird und ein weiteres der Signale durch die Sendevorrichtung (2) gebündelt an die weitere der Empfangsvorrichtungen (3) ausgesendet wird.

## Claims

1. Apparatus (1) for detecting at least one object (10),

wherein the apparatus (1) comprises at least one transmission apparatus (2) configured as a multi-lobe antenna, a support apparatus (6), several reception apparatuses (3) arranged at different positions of the support apparatus (6), and at least one evaluation apparatus (4),
wherein the transmission apparatus (2) is configured to transmit signals,
wherein the reception apparatuses (3) are configured to receive signals,
wherein the transmission apparatus (2) comprises different switchable directional characteristics, and is configured to orientate, by switching the directional characteristics, the transmission apparatus (2) configured as a multi-lobe antenna in a sequence with respect to the reception apparatuses (3),
wherein the evaluation apparatus (4) is configured to compare the signals transmitted by the transmission apparatus (2) with the signals received by the reception apparatuses (3), and to generate, for the signals received by the reception apparatuses (3), a comparison result associated with the respective reception apparatus (3) and/or the position of the respective reception apparatus (3),
wherein the evaluation apparatus (4) is configured to determine from the comparison result whether the object (10) is located between the transmission apparatus (2) and the reception apparatuses (3),
wherein the apparatus (1) is configured such that, in a step, by switching one of the directional characteristics, the transmission apparatus (2) is orientated to one of the reception apparatuses (3) and transmits one of the signals in a collimated way to the one of the reception apparatuses (3), and

wherein the apparatus (1) is configured such that, in a further step, by switching a further one of the directional characteristics, the transmission apparatus (2) is orientated to a further one of the reception apparatuses (3) and transmits a further one of the signals in a collimated way to the further one of the reception apparatuses (3).

2. Apparatus (1) according to claim 1, wherein the evaluation apparatus (4) is configured to determine, from the signals transmitted by the transmission apparatus (2) and the signals received by one of the reception apparatuses (3), an attenuation factor as a comparison result.

3. Apparatus (1) according to claim 2,

wherein the evaluation apparatus (4) is configured to determine for amplitudes of the respective signals an amplitude factor each, and wherein the evaluation apparatus (4) is configured to determine the attenuation factor from the respective amplitude factor and a calibration factor associated with the respective reception apparatus (3).

4. Apparatus (1) according to claim 2 or 3, wherein the evaluation apparatus (4) is configured to determine a contour of the object (10) from the attenuation factors and the positions of the reception apparatuses (3).

5. Apparatus (1) according to claim 4, wherein the evaluation apparatus (4) is configured to classify the object (10) on the basis of the determined contour of the object (10) and on the basis of contour data.

6. Apparatus 1 according to any of claims 2 to 5, wherein the evaluation apparatus (4) is configured to determine, from at least one determined attenuation factor, a statement about a material of the object (10).

7. Apparatus 1 according to any of claims 1 to 6,

wherein the evaluation apparatus (4) comprises a signal rating apparatus (5), wherein the signal rating apparatus (5) is configured to generate the comparison result, wherein the signal rating apparatus (5) is associated with the reception apparatus (3),

wherein the reception apparatuses (3) are configured to generate a response signal as a function of the comparison result, and wherein the reception apparatuses (3) output the response signal only upon presence of a specifiable condition.

8. Apparatus (1) according to any one of claims 1 to 7,

wherein the evaluation apparatus (4) comprises several signal rating apparatuses (5), wherein the signal rating apparatuses (5) are configured to generate comparison results, wherein the reception apparatuses (3) have associated therewith at least one signal rating apparatus (5) each, wherein the reception apparatuses (3) are configured to generate a response signal each as a function of the comparison result, and wherein the reception apparatuses (3) output the response signals only upon presence of a respective specifiable condition.

9. Apparatus (1) according to claim 7 or 8,

wherein the specifiable condition at least consists of an attenuation factor determined as a comparison result being larger than a specifiable attenuation threshold value, and/or wherein the specifiable condition at least consists of the comparison result being different from a previous comparison result above a specifiable development threshold value.

10. Apparatus (1) according to any of claims 1 to 9, wherein at least one of the reception apparatuses (3) serves as a transmission apparatus (2).

11. Apparatus (1) according to any of claims 1 to 10, wherein at least one of the reception apparatuses (3) is configured to switch from a passive state into an active state after receiving a signal.

12. Apparatus (1) according to any of claims 1 to 11, wherein at least one of the reception apparatuses (3) is configured to receive a signal from a specifiable spatial area.

13. Apparatus (1) according to any of claims 1 to 12, wherein the transmission apparatus (2) is configured to emit signals with different frequencies.

14. Apparatus (1) according to any one of claims 1 to 13,

wherein the transmission apparatus (2) comprises several different directional characteristics (8), and wherein the directional characteristics (8) each refer to a set of spatially different transmission characteristics.

**15.** Method for operating an apparatus (1) for detecting at least one object (10), wherein the apparatus (1) comprises at least one transmission apparatus (2) configured as a multi-lobe antenna, a support apparatus (6), several reception apparatuses (3) arranged at different positions of the support apparatus (6), and at least one evaluation apparatus (4), wherein the transmission apparatus (2) comprises different switchable directional characteristics, the method comprising:

transmitting signals by means of the transmission apparatus (2),

receiving signals by means of the reception apparatus (3),

orientating, by switching the directional characteristics, the transmission apparatus (2) configured as a multi-lobe antenna in a sequence with respect to the reception apparatuses (3),

comparing the transmitted signals with the received signals,

generating, for the signals received by the reception apparatuses (3), a comparison result associated with the respective reception apparatus (3) and/or the position of the respective reception apparatus (3),

determining, based on the comparison, whether the object (10) is located between the transmission apparatus (2) and the reception apparatus (3),

wherein, in a step, by switching one of the directional characteristics, the transmission apparatus (2) is orientated to one of the reception apparatuses (3) and one of the signals is transmitted by the transmission apparatus (2) in a collimated way to the one of the reception apparatuses (3), and

wherein, in a further step, by switching a further one of the directional characteristics, the transmission apparatus (2) is orientated to a further one of the reception apparatuses (3) and a further one of the signals is transmitted by the transmission apparatus (2) in a collimated way to the further one of the reception apparatuses (3).

**Revendications**

**1.** Dispositif (1) pour détecter au moins un objet (10),

dans lequel le dispositif (1) présente au moins un dispositif d'émission (2) conçu comme une antenne à lobes multiples, un dispositif de support (6), une pluralité de dispositifs de réception (3) qui sont disposés à des positions différentes du dispositif de support (6) et au moins un dispositif d'évaluation (4),

dans lequel le dispositif d'émission (2) est conçu pour émettre des signaux,

dans lequel les dispositifs de réception (3) sont conçus pour recevoir des signaux,

dans lequel le dispositif d'émission (2) présente différentes caractéristiques directionnelles commutables et est conçu de sorte que, par commutation des caractéristiques directionnelles, le dispositif d'émission (2) conçu comme une antenne à lobes multiples soit orienté en séquence vers les dispositifs de réception (3),

dans lequel le dispositif d'évaluation (4) est conçu pour comparer les signaux émis par le dispositif d'émission (2) avec les signaux reçus par les dispositifs de réception (3) et pour générer, pour les signaux reçus par les dispositifs de réception (3), un résultat de comparaison associé au dispositif de réception (3) respectif et/ou à la position du dispositif de réception (3) respectif,

dans lequel le dispositif d'évaluation (4) est conçu pour déterminer, à partir du résultat de comparaison, au moins si l'objet (10) se situe entre le dispositif d'émission (2) et les dispositifs de réception (3),

dans lequel le dispositif (1) est conçu de sorte que, dans une étape,

le dispositif d'émission (2) soit orienté, en commutant l'une des caractéristiques directionnelles, vers l'un des dispositifs de réception (3) et transmette l'un des signaux groupés à l'un des dispositifs de réception (3), et

dans lequel le dispositif (1) est conçu de sorte que, dans une autre étape, le dispositif de transmission (2) soit orienté, en commutant une autre des caractéristiques directionnelles, vers un autre des dispositifs de réception (3) et transmette un autre des signaux de manière groupée à l'autre des dispositifs de réception (3).

**2.** Dispositif (1) selon la revendication 1, dans lequel le dispositif d'évaluation (4) est conçu pour déterminer, à partir des signaux émis par le dispositif d'émission (2) et des signaux reçus par l'un des dispositifs de réception (3), une mesure d'atténuation comme résultat de comparaison.

**3.** Dispositif (1) selon la revendication 2,

dans lequel le dispositif d'évaluation (4) est conçu pour déterminer, pour chacune des amplitudes des signaux reçus, une mesure d'amplitude, et

dans lequel le dispositif d'évaluation (4) est conçu pour déterminer la mesure d'atténuation à partir de la mesure d'amplitude respective et d'une mesure de calibrage associée au dispositif de réception (3) respectif.

**4.** Dispositif (1) selon la revendication 2 ou 3, dans lequel le dispositif d'évaluation (4) est conçu pour déterminer, à partir des mesures d'atténuation et des positions des dispositifs de réception (3), un contour de l'objet (10).

**5.** Dispositif (1) selon la revendication 4, dans lequel le dispositif d'évaluation (4) est conçu pour classifier l'objet (10) à partir du contour déterminé de l'objet (10) et à partir des données de contour.

**6.** Dispositif (1) selon l'une des revendications 2 à 5, dans lequel le dispositif d'évaluation (4) est conçu pour déterminer, à partir d'au moins une mesure d'atténuation déterminée, une indication relative à un matériau de l'objet (10).

**7.** Dispositif (1) selon l'une des revendications 1 à 6,

dans lequel le dispositif d'évaluation (4) présente un dispositif d'évaluation de signal (5), dans lequel le dispositif d'évaluation de signal (5) est conçu pour générer le résultat de comparaison, dans lequel le dispositif d'évaluation de signal (5) est associé au dispositif de réception (3), dans lequel les dispositifs de réception (3) sont conçus pour générer un signal de réponse en fonction du résultat de comparaison, et dans lequel les dispositifs de réception (3) émettent le signal de réponse uniquement en cas de présence d'une condition pouvant être prédéfinie.

**8.** Dispositif (1) selon l'une des revendications 1 à 7,

dans lequel le dispositif d'évaluation (4) présente plusieurs dispositifs d'évaluation de signal (5), dans lequel les dispositifs d'évaluation de signal (5) sont conçus pour générer des résultats de comparaison, dans lequel est associé à chacun des dispositifs de réception (3) au moins un dispositif d'évaluation de signal (5), dans lequel les dispositifs de réception (3) sont conçus pour générer, chacun, un signal de réponse en fonction du résultat de comparaison, et dans lequel les dispositifs de réception (3) émettent les signaux de réponse uniquement en cas de présence d'une condition respective pouvant être prédéfinie.

**9.** Dispositif (1) selon la revendication 7 ou 8,

dans lequel la condition pouvant être prédéfinie consiste au moins en ce qu'une mesure d'atténuation déterminée comme résultat de comparaison est supérieure à une valeur limite d'atténuation pouvant être prédéfinie, et/ou dans lequel la condition pouvant être prédéfinie consiste au moins en ce que le résultat de comparaison diffère d'un résultat de comparaison précédent par une valeur limite de développement pouvant être prédéfinie.

**10.** Dispositif (1) selon l'une des revendications 1 à 9, dans lequel au moins l'un des dispositifs de réception (3) sert de dispositif d'émission (2).

**11.** Dispositif (1) selon l'une des revendications 1 à 10, dans lequel au moins un des dispositifs de réception (3) est conçu pour changer, après réception d'un signal, d'un état passif à un état actif.

**12.** Dispositif (1) selon l'une des revendications 1 à 11, dans lequel au moins un des dispositifs de réception (3) est conçu pour recevoir un signal d'une zone spatiale pouvant être prédéfinie.

**13.** Dispositif (1) selon l'une des revendications 1 à 12, dans lequel le dispositif d'émission (2) est conçu pour émettre des signaux à différentes fréquences.

**14.** Dispositif (1) selon l'une des revendications 1 à 13,

dans lequel le dispositif d'émission (2) présente plusieurs caractéristiques directionnelles différentes (8), et dans lequel les caractéristiques directionnelles (8) se rapportent, chacune, à une quantité de propriétés d'émission spatialement différentes.

**15.** Procédé permettant de faire fonctionner un dispositif (1) de détection d'au moins un objet (10), dans lequel le dispositif (1) présente au moins un dispositif d'émission (2) conçu comme une antenne à lobes multiples, un dispositif de support (6), plusieurs dispositifs de réception (3) qui sont disposés à des positions différentes du dispositif de support (6), et au moins un dispositif d'évaluation (4), dans lequel le dispositif d'émission (2) présente différentes caractéristiques directionnelles commutables, dans lequel le procédé comporte les étapes suivantes consistant à:

émettre des signaux au moyen du dispositif d'émission (2), recevoir des signaux au moyen du dispositif de réception (3), orienter le dispositif d'émission (2) conçu comme une antenne à lobes multiples en séquence vers les dispositifs de réception (3) en commutant les caractéristiques directionnelles,

comparer les signaux émis avec les signaux reçus,

générer un résultat de comparaison pour les signaux reçus par les dispositifs de réception (3), lequel est associé au dispositif de réception (3) respectif et/ou à la position du dispositif de réception (3) respectif, et

déterminer, sur base de la comparaison, si l'objet (10) se situe entre le dispositif d'émission (2) et le dispositif de réception (3),

dans lequel, dans une des étapes, le dispositif d'émission (2) est orienté, en commutant une des caractéristiques directionnelles,

vers un des dispositifs de réception (3) et un des signaux est émis de manière groupée par le dispositif d'émission (2) vers l'un des dispositifs de réception (3), et

dans lequel, dans une autre étape, le dispositif d'émission (2) est orienté, en commutant une autre des caractéristiques directionnelles, vers un autre des dispositifs de réception (3) et un autre des signaux est émis de manière groupée par le dispositif d'émission (2) vers l'autre des dispositifs de réception (3).

Fig. 1

Fig. 2

| 0 dB | 0 dB | 0 dB | 0 dB | 0 dB | 0 dB | 0 dB | 0 dB |
|------|------|------|------|------|------|------|------|
| 0 dB | 0 dB | 0 dB | 0 dB | 0 dB | 0 dB | 0 dB | 0 dB |
| 0 dB | 0 dB | 0 dB | 0 dB | 0 dB | 0 dB | 0 dB | 0 dB |
| 0 dB | 0 dB | 0 dB | 0 dB | 0 dB | 0 dB | 0 dB | 0 dB |
| 0 dB | 0 dB | 20 dB | 40 dB | 40 dB | 40 dB | 20 dB | 0 dB |
| 0 dB | 20 dB | 40 dB | 40 dB | 40 dB | 40 dB | 40 dB | 40 dB |
| 30 dB | 40 dB | 30 dB | 30 dB | 30 dB | 30 dB | 40 dB | 30 dB |

## Fig. 3

| 0 | 0 | 0 | 0 | 0 | 0 | 0 | 0 |
|---|---|---|---|---|---|---|---|
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 1 | 2 | 2 | 2 | 1 | 0 |
| 0 | 1 | 2 | 2 | 2 | 2 | 2 | 2 |
| 2 | 2 | 2 | 2 | 2 | 2 | 2 | 2 |

## Fig. 4

Fig. 5

EP 3 206 044 B1

Fig. 6

EP 3 206 044 B1

Fig. 7

Fig. 8a

| 0 dB | 0 dB | 0 dB | 0 dB | 0 dB | 0 dB | 0 dB | 0 dB |
|------|------|------|------|------|------|------|------|
| 0 dB | 0 dB | 0 dB | 0 dB | 0 dB | 0 dB | 0 dB | 0 dB |
| 0 dB | 0 dB | 0 dB | 0 dB | 0 dB | 0 dB | 0 dB | 0 dB |
| 0 dB | 0 dB | 0 dB | 0 dB | 0 dB | 0 dB | 0 dB | 0 dB |
| 0 dB | 0 dB | 20 dB | 40 dB | 40 dB | 40 dB | 20 dB | 0 dB |
| 0 dB | 20 dB | 40 dB | 40 dB | 40 dB | 40 dB | 40 dB | 40 dB |
| 30 dB | 40 dB | 30 dB | 30 dB | 30 dB | 30 dB | 40 dB | 30 dB |

Fig. 8b

Fig. 8c

| 0 dB | 0 dB | 0 dB | 0 dB | 0 dB | 0 dB | 0 dB | 0 dB |
|------|------|------|------|------|------|------|------|
| 0 dB | 0 dB | 0 dB | 0 dB | 0 dB | 30 dB | 0 dB | 0 dB |
| 0 dB | 0 dB | 0 dB | 0 dB | 0 dB | 30 dB | 0 dB | 0 dB |
| 0 dB | 0 dB | 0 dB | 0 dB | 10 dB | 30 dB | 0 dB | 0 dB |
| 0 dB | 0 dB | 20 dB | 0 dB | 0 dB | 30 dB | 0 dB | 0 dB |
| 30 dB | 30 dB | 0 dB | 0 dB | 0 dB | 30 dB | 0 dB | 0 dB |
| 30 dB | 30 dB | 0 dB | 0 dB | 0 dB | 30 dB | 0 dB | 0 dB |

Fig. 8d

Fig. 8e

| 0 dB | 0 dB | 0 dB | 0 dB | 0 dB | 0 dB | 0 dB | 0 dB |
|------|------|------|-------|-------|-------|------|------|
| 0 dB | 0 dB | 0 dB | 0 dB | 0 dB | 0 dB | 0 dB | 0 dB |
| 0 dB | 0 dB | 0 dB | 40 dB | 40 dB | 0 dB | 0 dB | 0 dB |
| 0 dB | 0 dB | 0 dB | 40 dB | 40 dB | 0 dB | 0 dB | 0 dB |
| 0 dB | 0 dB | 0 dB | 40 dB | 40 dB | 0 dB | 0 dB | 0 dB |
| 0 dB | 0 dB | 0 dB | 40 dB | 40 dB | 40 dB | 0 dB | 0 dB |
| 0 dB | 30 dB | 30 dB | 40 dB | 40 dB | 40 dB | 0 dB | 0 dB |

Fig. 8f

Fig. 9

Fig. 10

Fig. 11

Fig. 12

Fig. 13

EP 3 206 044 B1

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20130162459 A1
- DE 102013100817 A1
- GB 2525867 A
- US 6199902 B1
- DE 102009047199 A1